# EUROPÄISCHE PATENTSCHRIFT

(11) **EP 4 445 267 B1**
(45) Veröffentlichungstag und Bekanntmachung des Hinweises auf die Patenterteilung: **07.10.2026**
(21) Anmeldenummer: 22823631.1
(22) Anmeldetag: 07.12.2022
(51) Int. Cl.: G06Q 50/16, G06T 17/05, G06Q 30/0201, G06Q 50/26

(54) **VERFAHREN UND SYSTEM ZUR ERFASSUNG, VERARBEITUNG, UND DARSTELLUNG VON LOKATIONSDATEN**
METHOD AND SYSTEM FOR DETECTING, PROCESSING, AND DISPLAYING LOCATION DATA
PROCÉDÉ ET SYSTÈME DE DÉTECTION, DE TRAITEMENT ET D'AFFICHAGE DE DONNÉES DE LOCALISATION

(30) Priorität: 08.12.2021 CH 0706752021; 20.07.2022 CH 8672022
(43) Veröffentlichungstag der Anmeldung: 16.10.2024
(73) Patentinhaber: TerraStar AG, 4052 Basel (CH)
(72) Erfinder: VON SCHÖNAU, Alexander, 4052 Basel (CH); PAOLUCCI, Marc, 4052 Basel (CH); GÜRTLER, Stefan, 4600 Olten (CH)
(74) Vertreter: IPrime Rentsch Kaelin AG
(86) Internationale Anmeldenummer: PCT/IB2022/061892
(87) Internationale Veröffentlichungsnummer: WO 2023/105445

(56) Entgegenhaltungen:
- US-A1- 2019 318 439
- REY SERGIO J. ET AL: "STARS: Space-Time Analysis of Regional Systems", GEOGRAPHICAL ANALYSIS, vol. 38, no. 1, 1 January 2006 (2006-01-01), pages 67 - 86, XP055939582, ISSN: 0016-7363, DOI: 10.1111/j.0016-7363.2005.00675.x

## Beschreibung

Die vorliegende Erfindung betrifft die Erfassung, Verarbeitung und Darstellung von Lokationsdaten. Sie betrifft weiter ein Verfahren zur Visualisierung von Lokationsdaten in einer grafischen Benutzerschnittstelle (GUI) und ein Computersystem, alles gemäss den Oberbegriffen der unabhängigen Patentansprüche.

### Technologischer Hintergrund

Räumliche Informationssysteme haben seit ihrer Entstehung die Möglichkeiten der geografischen Datendarstellung erheblich erweitert und die visuelle Erforschung verschiedenster georeferenzierter Parameter ermöglicht. Daten aus einer Vielzahl von Quellen können in einer visuellen Darstellung, bzw. einer mehrschichtigen Karte, kombiniert werden. Hierzu gehören Datentypen wie Karten, Vektordaten, Vermessungen, Bilder, Gebäude, Verkehrsdaten und Vieles mehr. Die visuelle Datendarstellung kann interaktiv gestaltet werden, sodass die Daten innerhalb des räumlichen Informationssystems von Benutzern manipuliert werden können.

Beispielsweise in der Immobilien-Branche ist das Potenzial für diese Art von neuen räumlichen Informationstechnologien gross. Die raumzeitlichen Entwicklungen verschiedener Standorte kann genutzt werden, um Prognosen über die Zukunft dieser Standorte zu geben. Zum Beispiel sind Ansätze zur Identifikation von bestgeeigneten Mietobjekten für einen Mieter oder Geschäft in einem Standort bekannt, eine derartige Identifikation erfolgt üblicherweise durch lage-, nachfrage- oder modellbasierte Algorithmen. Erstere erfordert das Definieren von Lageparametern der Datenmenge, wobei die Lageparameter-Informationen oft nicht zur vollständigen Charakterisierung der Daten ausreichen, da sie keine Unterschiede der Werte und deren Verteilung zulassen. Nachfragebasierte Algorithmen dagegen funktionieren anhand von Nutzerbewegungsdaten, die in der Umgebung eines Point-of-Interest (POI) gesammelt werden und daraufhin analysiert werden können. Letztlich sind modellbasierte Algorithmen auf Referenzmodelle angewiesen unter der Annahme, dass sich ähnliche Standorte ähnlich entwickeln, wobei dies in der Realität jedoch häufig nicht der Fall ist.

Das herkömmliche Vorgehen bei einer Standortanalyse richtet sich nach dem Nachfragemarkt. Eine in der Immobilienwirtschaft wenig beachtete Alternative zu den oben erwähnten Standort- und Objektbewertungen ist die aus der Netzwerktheorie bekannte Analyse von wirtschaftlichen Ökosystemen. Gemäss lansiti und Levin (2004) hängt der wirtschaftliche Erfolg einer einzelnen Firma ab vom wirtschaftlichen Netzwerk, in dem er sich befindet und umgekehrt. In einem lokalen Kontext heisst dies, dass Struktur und Dynamik lokaler Geschäftsmixe entscheidend sind für den wirtschaftlichen Erfolg sowohl für die einzelne Firma wie für das lokale Kollektiv aller Firmen. Überträgt man die Erkenntnisse von lansiti und Levien auf den Markt für Gewerbemieten, dann sind es die Netzwerkeffekte lokaler Geschäftsökosysteme, die für die Entwicklung eines Standorts entscheidend sind und nicht die jeweiligen Mieter bzw. Geschäfte innerhalb des Standortes. Netzwerkhierarchien, wie zum Beispiel die Anzahl Ankermieter in einem Gebiet oder die Anzahl Präsenz- und Absenzgeschäfte prägen ein Geschäftsökosystem und spielen daher in der Mietobjekt- bzw. Mietersuche eine wichtige Rolle. Gemäss lansiti und Levien sind es Geschäftsökosysteme, die Passantenströme erzeugen, Verkehrserschliessungen erzeugen, den Erfolg eines Geschäfts bestimmen usw. und nicht umgekehrt wie in den meisten heutigen Lösungsansätzen angenommen. Die heutigen Lösungen sind lediglich mit der Standortwahl für einen Geschäfts- bzw. Mietertyp beschäftigt, sodass ein eindeutiger Bedarf nach technischen Lösungen besteht, die das Problem der optimierten Mieterwahl für einen bestimmten Standort ermöglichen und dadurch eine Synergiewirkung innerhalb eines Standortes bewirken. Ein derartiger netzwerkorientierter Vermietungs-Ansatz strebt einen optimalen Fit des Mieters mit dem lokalen Geschäftsmix an. Ein grosser Vorteil eines netzwerkorientierten Vorgehens ist zudem, dass sich aus der Analyse der Strukturdynamik von Geschäftsökosystemen deren wirtschaftliche Entwicklung prognostizieren lassen. Dazu ist die Zeitdimension unerlässlich um prädiktive Aussagen über die Stabilität, Instabilität oder Zukunftsaussichten eines Geschäfts- bzw. Standortökosystems machen zu können.

Die Lösungen aus dem Stand der Technik beruhen auf Big Data, sog. grossen Datenmengen, die mit herkömmlichen Verarbeitungsmethoden nur schwer auswertbar sind. In den genannten Lösungsansätzen werden aus Big Data Bedingungen erhoben, welche zum Teil eine sehr hohe Zahl an Parametern erfordern, um zuverlässige aufschlussreiche Angaben ausgeben zu können. Aufgrund der hohen Zahl an Parametern und grossen, oft unstrukturierten Datenmengen, sind die bisherigen Lösungen mit einem äusserst grossen rechnerischen Aufwand verbunden. Darüber hinaus verfügen diese Lösungen aufgrund der hohen Parameter-/ Variablenzahl über eine begrenzte Aussagekraft, sind anfällig auf Scheinkorrelationen und ihre Mustererkennung und Prognose beruht nur in seltenen Fällen auf eindeutigen Prädiktorvariablen, was ihre Nachvollziehbarkeit erschwert.

Eine recheneffizientere Alternative zu unstrukturierten Big Data sind Smart Data, bzw. intelligente Datenmengen. Diese Art von intelligenten Datenmengen ist bereits für den Verwendungszweck entsprechend filtriert und vorprozessiert, sodass deutlich effizientere Abläufe der Algorithmen möglich sind und eine transparente Datenlage zustande kommt, welche den jeweiligen Datenschutzrechten entgegenkommt. Für eine Skalierung der Anwendung wäre es zudem vorteilhaft, «Sparse Data» zu verwenden, d.h. ein Minimum an Daten aus öffentlichen und international einheitlich geführten Quellen. Diese können zum Beispiel Firmendaten, die nach NOGA ISIC, PRODCOM, CPC, NAICS und Weiteren rubriziert sind und für die sogenannten Umsteigeschlüssel verfügbar sind. Derartige «Sparse Data» können aus minimalen Datenmengen aufschlussreiche Resultate liefern. Die Datenbanken können aber auch auf sog. «Connected Data» beruhen, welchen mittels SPARQL-Queries abgefragt werden können.

Aufgrund der grossen Datenmengen und Analysekomplexität der Lösungen aus dem Stand der Technik sind Nutzer der Lösungsanwendungen von Datenlieferanten und Datenanalysten abhängig, sodass entsprechende Lösungen lediglich auf grossen Systemen mit erheblicher Rechenkraft und als SaaS-Lösung («Software as a Service») möglich sind. Allfällige Aktualisierungen sind ebenfalls mit einem erheblichen Rechenaufwand verbunden, sodass eine geografische bzw. räumliche Skalierung behindert wird. Ferner benötigen die herkömmlichen lage-, nachfrage- und referenzbasierten Daten-Lösungen aus dem Stand der Technik Un- und / oder Supervised Learning-Ansätze zur Mustererkennung in den Standortdaten. Ein derartiges Vorgehen zur Musterkennung ist auch rechen- sowie kostenintensiv.

Insbesondere datenschutzrechtlich betrachtet bewegen sich viele der Lösungen aus dem Stand der Technik in einem Graubereich, deren gewerblich anwendbare Zukunft ist daher nicht gewährleistet. Nutzerbewegungsdaten sowie weitere persönliche Informationen werden über verschiedene Sensoren oder Detektoren mittels Bluetooth, Wi-Fi und/ oder GPS gesammelt, oft ohne die ausdrückliche Zustimmung der jeweiligen Benutzer. Auch Suchabonnements und -anfragen auf Webseiten werden von einigen nachfragebasierten Algorithmen abgefangen und für weitere Zwecke verwendet. Datenschutzgesetze unterscheiden sich von Land zu Land, daher ist die Anwendung dieser Lösungen in einem grenzüberschreitenden Szenario häufig nicht möglich.

Die Verfahren aus dem Stand der Technik sind aufgrund ihrer unübersichtlichen Datenlage und dem zunehmenden Rechenaufwand nicht für rasch erfassbare und einfach verständliche Standortübersichten und Bewertungen geeignet. Eine Visualisierung potenzieller Entitäten, wie z.B. Mieter einer Branche, deren Synergiewirkung und den Netzwerkeffekten sind in dem Stand der Technik ebenfalls nicht bekannt. Aus der obigen Beschreibung des technologischen Hintergrunds geht hervor, dass ein Bedarf nach neuen Lösungen besteht, die den bereits erwähnten Nachteilen aus dem Stand der Technik entgegenwirken und auf einem Computersystem im privaten oder öffentlichen Rahmen, als Standalone- und/oder als SaaS-Lösung ausführbar sind. Diese Lösungen sollen recheneffizient, skalierbar, portierbar, datenschutzkonform und kostenextensiv sein. Diese Bedingungen erfordern ein Minimum an Daten sowie Abfolgen, die mit möglichst wenigen Baryzentren und wenigen Iterationen auskommen.

Auf den ersten Blick ist es äusserst schwierig, nützliche Informationen aus Roh-Lokationsdaten zu deduzieren, da die Rohdaten im Wesentlichen aus reinen Zahlen- und Buchstabenkombinationen bestehen. Zusammenhänge, Muster und Trends können anhand von Visualisierungen von vorverarbeiteten Lokationsdaten in grafischen Benutzerschnittstellen (GUI) einem Benutzer, und auch einem grösserem Publikum, auf eine interaktive, visuell ansprechende und verständliche Weise nähergebracht werden. Eine Interaktivität der Visualisierung bedeutet im vorliegenden Sinne, dass ein Benutzer anhand geeigneter GUI die Lokationsdaten selbstständig erkundigen kann, beispielsweise in einer Kartendarstellung, wodurch eine individuell anpassbare, visuelle Lernerfahrung ermöglicht wird.

Des Weiteren ist eine effektive Kommunikation von gewerblichen Lokationsinformationen bei Entscheidungsfindungen massgeblich. Vor allem in Bezug auf Standortanalysen und Geschäftsökosysteme können Lokationsinformationen nur schwer ohne geeignete Visualisierungstools Standortmuster von Gewerbemietern darstellen und Prognosen über deren Entwicklung vermitteln. Bei der Entscheidungsfindung ist es notwendig, ein umfassendes Verständnis der Standorte und Geschäftsökosysteme zu erlangen, da Einflüsse und Abhängigkeiten verschiedener Standorte sonst potenziell vernachlässigt werden. Ausserdem können Visualisierungstools einen Überblick der Zusammenhänge und Trends auf gross- und kleinräumiger Ebene ermöglichen.

In herkömmlichen Lösungen zur Visualisierung von Lokationsdaten des Standes der Technik wird lediglich die Informationsdichte in Abhängigkeit der dargestellten Lokationsdaten angepasst. Beispielsweise wird bei einem Vergrössern bzw. Zoomen einer Kartendarstellung von Lokationsdaten die dargestellte Menge an Lokationsdaten reduziert und auf die Grösse des vergrösserten Kartenabschnitts angepasst. Die grundlegende Struktur der kartografischen Darstellung bleibt hierbei unverändert, was den Informationsgehalt nicht wesentlich ändert.

US 8,209,121 B1 beschreibt Systeme und Verfahren zum Verbessern der Genauigkeit von Standortdaten, wie beispielsweise GPS-Daten. In einer Ausführungsform passt die Druckschrift Koordinaten durch Empfangen einer Folge von Koordinaten entsprechend einer Vielzahl von Standorten an und identifiziert in einer Kartendatenbank für jeden Standort Polylinienmerkmale innerhalb einer Entfernung von den Koordinaten des Standortes. Daraufhin werden Emissionswahrscheinlichkeiten und Übergangswahrscheinlichkeiten für die Polylinienmerkmale berechnet. Diese Emissionswahrscheinlichkeiten und Übergangswahrscheinlichkeiten werden anschliessend verwendet um die Koordinaten für die Vielzahl von Standorten anzupassen, sodass die angepassten Koordinaten Polylinienmerkmalen entsprechen, die zu einer Folge von Polylinienmerkmalen gehören, die basierend auf den Emissionswahrscheinlichkeiten und Übergangswahrscheinlichkeiten ausgewählt wurden, um die wahrscheinlichste Folge von Polylinienmerkmalen zu sein, die der Reihenfolge der Koordinaten entsprechen. Nebst der Verbesserung der Genauigkeit offenbart die Druckschrift raumbezogene Anwendungen und Benutzerschnittstellen durch das Hinzufügen grosser Mengen an Metainformationen zu einem Standort. Das Anpassen der Standortdaten für die Vielzahl von Standorten erfolgt durch einen PoseOptimierer, auch PoseOptimizer genannt, und ein Hidden Markov Model (HMM).

US 8,209,121 B1 offenbart Systeme und Verfahren zum Verbessern der Genauigkeit von Standortdaten, jedoch scheitert es dabei zu erläutern, wie eine verbesserte raumzeitliche Aufschlüsselung und HMM-Algorithmen benutzt werden können, um die raumzeitliche Entwicklung von Standorten in einer interaktiven bewegbaren Raum- und Zeitdarstellung zu ermitteln und daraus aufschlussreiche Einblicke und Prognosen über die Zukunft eines Standortes bereitzustellen.

Aus dem Stand der Technik ist EP 2 070 006 B1 bekannt, es beschreibt eine Methode für das Bereitstellen eines Mappings/ einer Kartierung, einer Datenverwaltung sowie Datenanalyse. Das Erstellen der Karte wird anhand einer Gaussschen-Aggregation und gewünschten Farbkartenparametern initiiert. Daraufhin werden die Daten, welche in der Karte abgebildet werden sollen, geladen, gerastert und anschliessend in einen vom Benutzer wählbaren Massstab konvertiert. Eine Faltung wird auf den Daten durchgeführt und die Resultate auf eine Farbrampe angewendet, sodass die Karte auf der Grundlage der Farbrampe und den Faltungsresultaten erstellt wird.

Die EP 2 070 006 B1 ist ein Beispiel eines lagebasierten Algorithmus, daher verfügt diese Lösung über mindestens die bereits erwähnten Nachteile. Zum Beispiel ist es erforderlich, dass der Benutzer Daten mit den Attributen, deren Zusammenhänge veranschaulicht werden sollen, hochlädt oder selbst definiert, wobei keinerlei Prognosen über die zeitliche Entwicklung dieser Attribute erstellt werden können ohne Daten über die gesamte Zeitperiode von Interesse bereitzustellen.

In der US 2019/0318439 A1 wird die Modellierung von Wetter- und geografischen Daten für das Management von Naturkatastrophen, insbesondere für die Vorhersage von Hochwasserschäden und die Planung von Überschwemmungsschutzmassnahmen eingesetzt.

### Darstellung der Erfindung

Die folgende Beschreibung der vorteilhaften Ausführungsformen der Erfindung soll die Erfindung nicht auf einzelne vorteilhafte Ausführungsformen beschränken, sondern dient dazu dem Fachmann die Möglichkeit geben, die Erfindung auszuführen und zu verwenden.

Eine Aufgabe der Erfindung besteht darin, mindestens einige der Nachteile des Standes der Technik zu vermeiden und eine interaktive oder interaktiv bewegbare Zeit- und Raumdarstellung georeferenzierter Lokationsdaten zu ermöglichen. Insbesondere soll ein Verfahren bereitgestellt werden zur Erfassung, Verarbeitung, Darstellung und Visualisierung von Lokationsdaten.

Diese und weitere Aufgaben werden durch die Merkmale der unabhängigen Patentansprüche gelöst. Weitere vorteilhafte Ausführungsformen sind in den abhängigen Ansprüchen gegeben.

Ein Aspekt der vorliegenden Erfindung betrifft ein Verfahren zur Erfassung, Verarbeitung und Darstellung von Lokationsdaten, wobei das Verfahren ein Einlesen von Lokationsdaten, die zumindest erste Lokationsdaten und zweite Lokationsdaten umfassen, eine Vorverarbeitung der ersten Lokationsdaten sowie eine Vorverarbeitung der zweiten Lokationsdaten umfasst. Die vorverarbeiteten ersten Lokationsdaten und vorverarbeiteten zweiten Lokationsdaten werden mittels Schichtung zu geschichteten Lokationsdaten überlagert und anschliessend durch Differenzierung und Einteilung der geschichteten Lokationsdaten mittels Mustererkennung zu regionalisierten Lokationsdaten umgewandelt. Das Analysieren der regionalisierten Lokationsdaten erfolgt mittels eines Analyse-Moduls, woraufhin Befehlsdaten als Reaktion auf das Analysieren der regionalisierten Lokationsdaten erzeugt werden, wobei die Befehlsdaten geographische Referenzdaten umfassen, die mit einer Zeitkomponente gekoppelt sind, und wobei die geographischen Referenzdaten auf einem Ausgabegerät mit Display durch eine interaktiv bewegbare Zeit- und Raumdarstellung ausgegeben werden.

Die ersten und/oder zweiten Lokationsdaten sind mit mindestens einem Attribut assoziiert und das Einlesen der ersten und/oder zweiten Lokationsdaten umfasst ferner ein Erstellen von Listen aus mindestens einer Datenbank. Die Lokationsdaten können mit einer Vielzahl von Attributen assoziiert sein, wobei die Lokationsdaten bereits beim Einlesen mit mindestens einem Attribut assoziiert sind oder vom Benutzer nach Einlesen spezifiziert werden können. Die Listen können aus einer Vielzahl von Datenbanken erstellt werden, in einer Ausführung der vorliegenden Erfindung werden Geschäftslisten aus beispielsweise Adress-, Branchen- und Handelsamtsverzeichnissen und/ oder Handelsregistern erstellt. Daraufhin werden Listen von Points-of-Interest (POI) aus Datenbanken erstellt. In einer möglichen Ausführung können geschäftsrelevante POI-Listen wie zum Beispiel Parkplätze, Haltestellen und/oder Ähnliches aus GIS-Repositorien, O-pen Street Maps (OSM-Karten) oder Ähnlichem erstellt werden. Alternativ können in einer weiteren Ausführung auch Liegenschaftslisten aus Datenbanken erstellt werden. Aus dem vorstehenden ergibt sich, dass die vorliegende Erfindung aus einer minimalen Konfiguration aus Geschäftsadressverzeichnissen und nationalen Firmenregistern ein Datenmodell erstellen kann. Die Datenbanken können global unterhalten werden, enthalten vollständige, einheitliche, nicht-sensible Unternehmensdaten und können in den meisten Ländern entweder über eine Datenschnittstelle (API), über Look-ups (Scraping) oder über eine Bereitstellung der Daten (CD, csv) bezogen werden.

Die Vorverarbeitung der ersten und der zweiten Lokationsdaten umfasst eine Geokodierung und/oder Zeitkodierung der Lokationsdaten sowie eine anschliessende Zuweisung der raumzeitlich kodierten Lokationsdaten zu vordefinierten Gruppen. Die Geokodierung führt dazu, dass die Lokationsdaten nach der Zeit- und Geokodierung zeitlich befristete x-, y-Koordinaten besitzen. Nach der Zeit- und Geokodierung werden die Lokationsdaten vordefinierten Gruppen zugewiesen. Hierbei werden die ersten Lokationsdaten, welche in einer möglichen Ausführung Listen enthalten, vordefinierten Gruppen zugewiesen, wobei die Listen Geschäftslisten und die Gruppen Geschäftsrubriken sein können, zum Beispiel die Geschäftsrubriken gemäss NACE («nomenclature statistique des activités économiques dans la Communauté européenne») oder anderer beliebiger Klassifizierung. In diesem Fall, beinhalten die mindestens zweiten Lokationsdaten POl-Listen und/oder Objektdaten.

Die Überlagerung der vorverarbeiteten mindestens ersten und zweiten Lokationsdaten mittels Schichtung beinhaltet das Erstellen einer Kartenebene, einer Punkteebene und einer Filterebene. Die Kartenebene dient hier als Orientierungsebene ohne analytische Bedeutung, wobei die Punkteebene die Koordinaten der jeweiligen Standorte und Entitäten umfasst. In einer möglichen Ausführung zeigt die Punkteebene Geschäftslokalitäten und/ oder geschäftswichtige Einrichtungen an, wie zum Beispiel Parkplätze, Haltestellen, Verkehrskreuzungen und Weiteres. In einem weiteren Schritt werden einzelne Standorte bzw. Entitäten auf der Punkteebene durch eine sogenannte Rasterebene ergänzt. Auf dieser sind Standorte bzw. Entitäten miteinander verknüpft auf Basis von vorbestimmten Merkmalen. Diese Merkmale sind ein einer möglichen Ausführung Transaktionsmerkmale, wobei die Entitäten, beispielsweise Geschäfte, auf der Rasterebene durch geografische Barrieren getrennt, jedoch durch die Transaktionsmerkmale miteinander verbunden sind. Die Filterebene ermöglicht es die mehrschichtige überlagerte Karte nach wählbaren Parametern zu filtrieren. Die Filterebene dient der Veränderung der Informationsdichte, zum Beispiel durch Anpassung des Zeitraums und/ oder der Menge aller erfassten Daten.

Die Differenzierung und Einteilung der geschichteten Lokationsdaten mittels Mustererkennung zu regionalisierten Lokationsdaten umfasst ein Erstellen einer mehrdimensionalen geografischen Clusterebene auf der Basis der Punkte- und Filterebene. Die mehrdimensionale Clusterebene kann in einer Ausführung vier Dimensionen umfassen, nämlich die Dichte eines ersten Parameters, die quantitative Dynamik des ersten Parameters, die qualitative Dynamik des ersten Parameters sowie die Zeit als diskrete Variable. Die vier Dimensionen können Auskunft über die Struktur, Qualität und Dynamik eines Standortes geben und können in einem weiteren Schritt dazu verwendet werden intakte, gefährdete oder irreparable Standortsökosysteme zu identifizieren.

Eine Einteilung von geografischen Gebieten gemäss dem vorliegenden Verfahren erfolgt entlang Geschäftsökosystemen, d.h. entlang Gebieten mit unterschiedlichen Verteilungen und Dynamiken, beispielsweise von Geschäftsgründungen und -schliessungen. Diese Aufteilung ist eine neuartige Lösung für das Modifiable Areal Unit Problem (MAUP). In einer vorgesehenen Ausführung der vorliegenden Erfindung lässt sich das generelle Mieterrisiko an einem gegebenen Standort, das Risiko eines Mieters aus einer gegebenen Branche am Standort und das individuelle Risiko eines Mieters innerhalb der gegebenen Branche berechnen. Eine dynamische Gebietsaufteilung in Geschäftsökosysteme erzeugt dabei ein Minimum an relevanten Baryzentren, was sich günstig auf die Recheneffizienz und die Verständlichkeit der Visualisierung, nämlich durch möglichst grosse Gebietseinteilung, auswirkt.

Das Analysieren der regionalisierten Lokationsdaten mittels Analyse-Moduls erfolgt auf exploratorischer Raum-Zeit-Basis, wobei das Analyse-Modul in einer vorteilhaften Ausführungsform eine Markov Abfolge, insbesondere eine LISA Markov Abfolge («Local Indicators of Spatial Association (LISA) Markov Chain»), umfasst, die auf Cluster- und Filterebene durchgeführt werden kann. Die LISA Markov Abfolge zeichnet sich dadurch aus, dass auch Daten, die nur eine begrenzte Vorgeschichte des Standortes beschreiben, ausreichen, um Prognosen über die spatiotemporale Entwicklung des Standortes ausgeben zu können. Das heisst, dass mit einer kleinen Variablenzahl und dementsprechend kleinen Rechenaufwand, zuverlässige Resultate geliefert werden können. Dies beruht auf der Grundlage, dass Markov-Prozesse «gedächtnislos» sind und daher der zukünftige Zustand eines Systems nur auf den unmittelbar vorherigen Zustand des Systems basiert.

Das Analysieren mittels LISA Markov Abfolge umfasst ein Erzeugen von Transitionsmatrizen, welche Transitionswerte beinhalten. Die Transitionswerte beschreiben die Übergangswahrscheinlichkeiten von einem Zustand in einen anderen Zustand. In einer möglichen Ausführungsform beziehen sich diese Übergangswahrscheinlichkeiten auf potenzielle Entitäten und deren Übergangswahrscheinlichkeiten von einem Status zu einem anderen Status. In einer möglichen Ausführungsform können die Entitäten Mieter bzw. Geschäfte sein. In diesem Beispiel ist der «Status» eines Geschäftsökosystems a) stabil, b) negativ dynamisch (mehr Geschäftsaufgaben), c) positiv dynamisch (mehr Neugründungen), wobei auch die absolute Zahl der Geschäfte und auch die quantitative Veränderung berücksichtigt werden.

In weiteren möglichen Ausführungsformen umfasst die Verarbeitung und das Analysieren der regionalisierten Lokationsdaten ferner eine Ripley-Funktion (G, K und L), Survival-Analysen, vorteilhafterweise mittels Cox-Regressionen und/ oder Kaplan-Meier-Schätzer, und/oder Machine Learning Abfolgen. Diese weiteren möglichen Ausführungen ermöglichen eine weiterführende raumzeitliche Analyse von Standorten und Entitäten. Beispielsweise kann die Ripley-Funktion verwendet werden, um die Veränderungen von räumlichen Cluster-Bildungen und die Streuung von Entitätsmerkmalen in Abhängigkeit von der Nachbarschaftsgrösse zu ermitteln. Mit einer Cox-Regression, oder Kaplan-Meier-Schätzer, Machine Learning und LISA Markov Abfolgen können Risikoanalysen durchgeführt werden. Mit der erstgenannten Methode können die Einflüsse von mehreren Parametern auf einen Fall bzw. ein Eintreten eines Ereignisses untersucht werden, wobei ein derartiges Ereignis beispielsweise die Schliessung oder Eröffnung einer Entität, beispielsweise eines Geschäfts, innerhalb eines Standortes sein kann. oder Kaplan-Meier-Schätzer hingegen befassen sich mit der Schätzung der Wahrscheinlichkeit, dass ein bestimmtes Ereignis innerhalb eines Zeitraums nicht eintritt. Bezugnehmend auf das Beispiel der Geschäfte innerhalb eines Standortes, können Mieterrisiken auf raumzeitlicher Basis analysiert werden, beispielsweise Individualrisiken mittels Cox-Regression oder Machine Learning Abfolgen, Kollektiv-Risiken bzw. Branchen-Risiken mittels Cox-Regression und daraus abgeleitete Standort-Risiken mittels LISA Markov Abfolgen. Eine Risiko-Aggregation aus den jeweiligen Analysen ist zudem auch in einer möglichen Ausführungsform vorgesehen. Künstliche Intelligenz (Machine Learning, Fuzzy NLP und Deep Neural Networks) kann ferner dazu verwendet werden, um nichtklassifizierte Entitäten, beispielsweise Geschäfte, mittels Vergleiches mit bezeichneten Entitäten zu klassifizieren, beispielsweise nach bestimmten Geschäftsrubriken. Die Zuteilung von Entitäten zu Rubriken kann **in** einer weiteren möglichen Ausführung vorteilhafterweise mit einer Machine Learning Abfolge in Form einer Transformer-Abfolge erfolgen.

Die auf Basis der Analyse erzeugten Befehlsdaten umfassen geographische Referenzdaten, die mit einer Zeitkomponente gekoppelt oder mit einem Zeitstempel markiert sind. Die geographischen Referenzdaten können darauffolgend auf einem Ausgabegerät mit Display ausgegeben werden, sodass eine Visualisierung der geographischen Referenzdaten erfolgt. Die Visualisierung ist hierbei eine interaktiv bewegbare Raum- und Zeitdarstellung in Form eines Mappings und kann wahrnehmbaren zwei- oder dreidimensional wiedergegeben werden. In einer möglichen Ausführungsform ist die interaktiv bewegbare Raum- und Zeitdarstellung ein Mapping von branchenspezifischen Tragfähigkeiten, Risiken und/ oder Potenzialen eines Standortes. In einer vorgesehenen Anwendung der vorliegenden Erfindung basiert die Daten-Visualisierung auf den Geschäftsökosystemen und zeigt Vermietern wie auch Mietern den Zustand und die Dynamik eines Geschäftsökosystems an einem Standort, eine allfällige Über- oder Unterversorgung mit bestimmten Dienstleistungen. Es lassen sich auch für weniger günstige Standorte jene Mieter ermitteln, welche das lokale Ökosystem aufwerten und das kleinste Ausfallrisiko bzw. die beste Überlebenschance haben. Die Entwicklung der Vergangenheit, sogenanntes Backcasting, kann ebenfalls abgebildet und künftige Entwicklung, sogenanntes Forecasting, prognostiziert werden auf der Basis der Überlebenstabellen, auch Survival-Tables genannt, und der Markov-Transitionsmatrizen.

In einer möglichen Ausführungsform erfolgt die Einteilung des Untersuchungsgebiets durch eine Perimeter-Einteilung. Diese Perimeter-Einteilung kann in der interaktiv bewegbaren Raum- und Zeitdarstellung in Form eines Mappings mittels einer Moving Circle Methode realisiert werden, wobei diese zudem eine optimierte Moving Circle Methode sein kann, welche unter Berücksichtigung weiterer Entitäts- oder Standortsmerkmalen die Perimeter-Einteilung anpasst. Die Visualisierung der Dichte von Entitäts- bzw. Standortsmerkmalen kann durch eine Dichte-Funktion in Form einer Kernel Density Estimation (KDE) ausgeführt werden. In weiteren möglichen Ausführungsformen sind manuelle sowie automatische Perimeter-Erstellung bzw. -Einteilung vorgesehen, um branchenspezifische durchschnittliche Sitzverlegungsdistanzen und damit verbundene Einzugsgebiete möglicher Entitäten zu berücksichtigen.

Bei besonderen Ausführungsformen kann unter Beizug von Bilderdaten, zum Beispiel in Form von Satellitenbildern, eine höhere Auflösung auf regionaler sowie lokaler Ebene erzielt werden. Des Weiteren ermöglicht ein Beizug von derartigen Bilderdaten eine realitätsnahe Visualisierung der Daten.

Ein weiterer Aspekt der vorliegenden Erfindung betrifft ein Verfahren zur Visualisierung von Lokationsdaten in einer grafischen Benutzerschnittstelle (GUI). Das Verfahren umfasst das Bereitstellen von geschichteten, geokodierten Lokationsdaten aus mindestens einer Datenbank in einer mehrschichtigen interaktiven Kartendarstellung mit Informationsgehalt in der GUI, Bestimmen einer von einem Benutzer selektierten Fläche der mehrschichtigen interaktiven Kartendarstellung, und Anpassen des Informationsgehalts und struktureller Merkmale der mehrschichtigen interaktiven Kartendarstellung in Abhängigkeit der vom Benutzer selektierten Fläche, wobei die Anpassung mindestens einer Schicht der mehrschichtigen interaktiven Kartendarstellung eine Veränderung der angezeigten Lokationsdaten umfasst und in Abhängigkeit der vom Benutzer selektierten Fläche automatisiert erfolgt.

Die Visualisierung der Lokationsdaten umfasst eine geografische Darstellung von dynamischen Verteilungen mindestens eines mit den Lokationsdaten assoziierten Parameters. Dieser Parameter liefert vorteilhafterweise Aufschlüsse über ein Geschäfts- bzw. Mieterökosystem, wobei der dargestellte Informationsgehalt dieses Parameters sich automatisch auf den dargestellten kartografischen Flächenausschnitt anpasst. In einer bevorzugten Ausführung kann ein Benutzer per Zoomfunktion den dargestellten kartografischen Flächenausschnitt ändern, bzw. durch Heran- oder Herauszoomen, woraufhin sich der Informationsgehalt automatisch ändert. In einer alternativen Ausführung kann die Dichte des Flächenausschnitt der Auslöser für die Anpassung des Informationsgehalts in der Kartendarstellung sein. Auf diese Weise kann sichergestellt werden, dass die Visualisierung der Lokationsdaten in der Kartendarstellung verständlich und nicht durch einen exzessiven Informationsgehalt unübersichtlich ist. Die Schichten der mehrschichtigen interaktiven Kartendarstellung sind hierbei miteinander verknüpft, sodass eine Änderung einer einzelnen Schicht auch eine Änderung der anderen Schichten herbeiführt.

In einer möglichen Ausführungsform der vorliegenden Erfindung kann die Visualisierung der Lokationsdaten als Gradientendarstellung mit Vektorfeldern, welche die Dynamik mindestens eines mit den Lokationsdaten assoziierten Parameters wiedergeben, erfolgen. Eine derartige Visualisierung als Gradientendarstellung ist besonders bei grösseren Distanzen sinnvoll, da sonst die Informationsdichte so gross ist, dass der Informationsgehalt der Kartendarstellung unübersichtlich wird. Beispielsweise ist es möglich, dass die Vektoren der Gradientendarstellung auf die Attraktivität eines Standorts hinweisen, wobei die Anzahl Vektoren bzw. die Dichte des Vektorfelds dabei direkt mit der Attraktivität des Standorts zusammenhängt.

Die mehrschichtige interaktive Kartendarstellung umfasst mindestens eine erste Schicht, eine zweite Schicht und eine dritte Schicht. Dabei ist in einer bevorzugten Ausführungsform die erste Schicht eine geografische und/ oder zeitliche Navigationsebene, die zweite Schicht eine Informationsebene und die dritte eine Filterebene. Die Navigationsebene kann in einer einfachen Ausführung eine Kartenebene mit Lokationsdaten umfassen, wie beispielsweise geografische Karten aus öffentlich zugänglichen Datenbanken. Die Zeit-Komponente kann in einer alternativen Ausführung als eigene Navigationsebene realisiert werden, v.a. dann, wenn die Lokationsdaten über längere Zeiträume vorliegen. Die Zeit-Komponente kann alternativ als Filterfunktion mittels Zeitfilter (sozusagen ein Zeit-Zoom oder Zeitschieber) realisiert werden, welcher Veränderungen in der Zeit darstellen lässt. Die Informationsebene enthält Informationen zu mindestens einem mit den Lokationsdaten assoziierten Parameter. Der dargestellte Informationsgehalt der mehrschichtigen interaktiven Kartendarstellung kann schliesslich mittels räumlicher, zeitlicher, thematischer und/ oder weiterer Filterebene angepasst werden. Die mehrschichtige interaktive Kartendarstellung kann in einer weiteren möglichen Ausführungsform unter Einbezug zusätzlicher Lokationsdaten als 3-dimensionale Kartendarstellung ausgeführt werden.

In einer alternativen Ausführungsform umfasst das Verfahren ferner ein Anpassen des Informationsgehalts der mehrschichtigen interaktiven Kartendarstellung in Abhängigkeit vom Benutzerverhalten mittels eines Beobachtungssystems, insbesondere einer Kamera. Dabei fungiert die Kamera als zusätzlicher Trigger für die Anpassung des Informationsgehalts. Die Blickpfade und die Verweildauer eines Benutzers kann anhand der Kamera verfolgt werden, auch Augen-Tracking (im Engl. «Eye-Tracking) genannt. Somit kann der dargestellte Informationsgehalt intelligent an das Benutzerverhalten angepasst werden. Ausserdem kann in einer noch weiteren möglichen Ausführungsform der dargestellte Informationsgehalt mittels Sprachsteuerung gesteuert werden. Eine derartige Sprachsteuerung kann über sog. «voice events» (Sprachereignisse) erfolgen, wobei die meisten herkömmlichen Rechner bereits die notwendige Infrastruktur, nämlich ein internes Mikrofon, aufweisen.

Die Anpassung mindestens einer Schicht der mehrschichtigen interaktiven Kartendarstellung in Abhängigkeit der vom Benutzer selektierten Fläche umfasst in einer weiteren möglichen Ausführungsform eine Gewichtung und ein Ein-, Aus- oder Überblenden einzelner Schichten der mehrschichtigen interaktiven Kartendarstellung. Dabei erfolgt die Anpassung vorteilhafterweise durch verschiedene Zoomstufen und der Wechsel von einer zur anderen Zoomstufe durch Ausblenden (fade-out) einer vorherigen Zoomstufe. Ausserdem ist es in einer alternativen Ausführungsform möglich, dass die Anpassung mindestens einer Schicht der mehrschichtigen interaktiven Kartendarstellung mittels eines sog. Fly-in Windows unterstützt wird.

Ein Benutzer kann in einer vorteilhaften Ausführungsform die Zoomstufe entweder per Maus, per Pfeiltaste oder per Sprachbefehl verändern. Dieser Befehl wird von einem geeigneten Programm mittels sogenanntem «mouse event» (Mausereignis), «keystroke event» (Tastendruckereignis) oder «voice event» (Sprachereignis) erfasst und der Informationsgehalt der mehrschichtigen interaktiven Kartendarstellung entsprechend verändert. Vorteilhafterweise sollten dabei die Informationen auf drei Schichten verteilt werden, wobei die erste Schicht eine geografische Karte, die zweite Schicht generelle, nichtunternehmensspezifische Informationen zur Lagequalität, beispielsweise ÖV-Informationen, Parkplätze, Passantendichte, Lärm-Emissionen o.ä (diese Informationen stammen aus GIS-Datenbanken), und die dritte Schicht eine Darstellung einer Unternehmensdynamik, beispielsweise Survival oder Konkurrenzverhältnisse, umfasst.

In der ersten Schicht wird die Veränderung der geografischen Karten automatisch über vorprogrammierte Verdichtungs- und Expansions-Algorithmen angepasst. In einer erfindungsgemässen zweiten und dritten Schicht ist in einer besonders bevorzugten Ausführungsform ein Parallel-Computing-Verfahren vorgesehen, um den Algorithmus möglichst recheneffizient zu halten. Ebenfalls vorsehbar sind weitere Elemente zur recheneffizienteren Verarbeitung, insbesondere ein STARE-Verfahren, welches die Anzahl der Datenbewegungen minimiert, indem Daten im Memory analog ihrer tatsächlichen zeitgeografischen Lage angeordnet werden. Das Parallel-Computing-Verfahren führt neben der Berechnung/ Rendering der aktuellen Zoomstufe jeweils auch die Berechnung der nächstfolgenden grösseren oder kleineren Zoomstufe aus. Des Weiteren werden nicht mehr benötigte Daten aus dem Arbeitsspeicher für raschen Wieder-Zugriff zwischengespeichert/ ausgelagert. Die Berechnung besteht jeweils aus einem Filtervorgang, der eine oder mehrere Variablen des Datensatzes umfassen kann, z.B. Filter nach Koordinaten, um Objekte in einem bestimmten Kartenausschnitt darzustellen, Filterung der Zeit-Komponente, um einen bestimmten Zeitabschnitt darzustellen, Filter nach Branchen- oder Unternehmenseigenschaften, um bestimmte Mietermerkmale auszuschliessen und so weiter.

Die Lokationsdaten sind mit mindestens einem Parameter assoziiert, können aber auch mit einer Vielzahl von Parametern assoziiert sein. Das Bereitstellen der Lokationsdaten umfasst ein Erstellen von Listen, wobei die Listen aus einer Vielzahl von Datenbanken erstellt werden können. In einer Ausführung der vorliegenden Erfindung werden Geschäftslisten aus beispielsweise Adress-, Branchen- und Handelsamtsverzeichnissen und/ oder Handelsregistern erstellt. Daraufhin werden Listen von Points-of-Interest (POI) aus Datenbanken erstellt. In einer möglichen Ausführung können geschäftsrelevante POI-Listen wie zum Beispiel Parkplätze, Haltestellen und/oder Ähnliches aus GIS-Repositorien, Open Street Maps (OSM-Karten) oder Ähnlichem erstellt werden. Alternativ können in einer weiteren Ausführung auch Liegenschaftslisten aus Datenbanken erstellt werden. Aus dem vorstehenden ergibt sich, dass die vorliegende Erfindung aus einer minimalen Konfiguration aus Geschäftsadressverzeichnissen und nationalen Firmenregistern ein Datenmodell erstellen kann. Die Datenbanken können global unterhalten werden, enthalten vollständige, einheitliche, nicht-sensible Unternehmensdaten und können in den meisten Ländern entweder über eine Datenschnittstelle (API), über Look-ups (Scraping) oder über eine Bereitstellung der Daten (CD, csv) bezogen werden.

Die Vorverarbeitung der ersten und der zweiten Lokationsdaten umfasst eine Geokodierung und/oder Zeitkodierung der Lokationsdaten sowie eine anschliessende Zuweisung der raumzeitlich kodierten Lokationsdaten zu vordefinierten Gruppen. Die Geokodierung führt dazu, dass die Lokationsdaten nach der Zeit- und Geokodierung zeitlich befristete x-, y-Koordinaten besitzen. Nach der Zeit- und Geokodierung werden die Lokationsdaten vordefinierten Gruppen zugewiesen. Hierbei werden die ersten Lokationsdaten, welche in einer möglichen Ausführung Listen enthalten, vordefinierten Gruppen zugewiesen, wobei die Listen Geschäftslisten und die Gruppen Geschäftsrubriken sein können, zum Beispiel die Geschäftsrubriken gemäss NACE («nomenclature statistique des activités économiques dans la Communauté européenne») oder anderer beliebiger Klassifizierung. In diesem Fall, beinhalten die mindestens zweiten Lokationsdaten POI-Listen und/oder Objektdaten.

Für den Fachmann ist es selbstverständlich, dass alle beschriebenen Ausführungsformen in einer erfindungsgemässen Ausgestaltung der vorliegenden Erfindung verwirklicht sein können, sofern sie sich nicht explizit gegenseitig ausschliessen.

Im Folgenden wird die vorliegende Erfindung nun anhand konkreter Ausführungsbeispiele und Figuren näher erläutert, ohne jedoch auf diese beschränkt zu sein.

Durch das Studium dieser besonderen Ausführungsformen und Figuren können sich für einen Fachmann weitere vorteilhafte Ausführungen der vorliegenden Erfindung ergeben.

### Figurenbeschrieb

Anhand der nachfolgenden Figuren werden Ausführungsbeispiele der Erfindung beschrieben, wobei gleiche Referenzzeichen gleiche oder ähnliche Teile bezeichnen. Es zeigen
- Fig. 1: eine schematische Abfolge von Schritten gemäss dem erfindungsgemässen Verfahren;
- Fig. 2: eine schematische Abfolge von Schritten gemäss dem erfindungsgemässen Verfahren in einer möglichen Ausführung;
- Fig. 3a, 3b: eine schematische Ansicht der Überlagerung der mehreren Ebenen gemäss dem erfindungsgemässen Verfahren;
- Fig. 4: eine schematische Darstellung eines Markov-Prozesses mit Transitionswerten;
- Fig. 5: eine schematische Darstellung eines Computersystems umfassend Mittel zur Ausführung des erfindungsgemässen Verfahrens;
- Fig. 6: eine schematische Darstellung einer möglichen Ausführungsform des Computersystems gemäss Fig. 5 umfassend Mittel zur Ausführung des erfindungsgemässen Verfahrens;
- Fig. 7: eine vorteilhafte Ausführungsform der interaktiv bewegbaren Visualisierung als Mapping;
- Fig. 8a, 8b, 8c: vorteilhafte Ausführungsformen der Visualisierung von Daten in einem Rendering in Form eines Mappings, darstellend Basel im Jahr 2009 (a), 2016 (b) und 2020 (c);
- Fig. 9: eine dreidimensionale Visualisierung von Daten als Mapping;
- Fig. 10: eine schematische Darstellung eines Datenverarbeitungsprozesses gemäss einer möglichen Ausführung;
- Fig. 11a bis 11h: eine mehrschichtige interaktive Visualisierung von Lokationsdaten in einer Kartendarstellung, umfassend einen Base Layer in Form einer OSM-Karte, in einer grafischen Benutzerschnittstelle (GUI);
- Fig. 12a bis 12h: vorteilhafte Ausführungsform einer mehrschichtigen interaktiven Visualisierung von Lokationsdaten in Form eines Mappings mit automatischen Informationswechsel in einer grafischen Benutzerschnittstelle (GUI);
- Fig. 13: eine schematische Abfolge von Schritten gemäss dem erfindungsgemässen Verfahren;
- Fig. 14: eine schematische Darstellung eines Computersystems umfassend Mittel zur Ausführung des erfindungsgemässen Verfahrens; und
- Fig. 15: eine schematische Darstellung einer Systemarchitektur eines erfindungsgemässen Systems.

### Ausführung der Erfindung

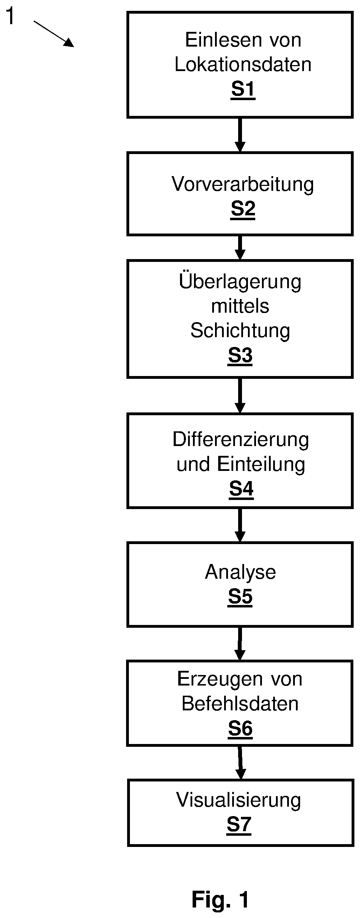

**Fig. 1** zeigt eine Abfolge von Schritten gemäss dem erfindungsgemässen Verfahren 1 zur Erfassung, Verarbeitung und Darstellung von Lokationsdaten. In einem ersten Schritt S1 werden Lokationsdaten eingelesen. Unter Lokationsdaten werden hier namentlich Informationen über Liegenschaftsobjekte verstanden, wie beispielsweise Adress-/ Positionsdaten, Kartenparametrisierungen oder Bildinformationsdaten. Die Lokationsdaten können aus verschiedenen Quellen bezogen werden und eine Vielzahl von Parametern enthalten. Die Lokationsdaten werden anschliessend in einem zweiten Schritt S2 vorverarbeitet, sodass sie eine Geokodierung enthalten und vordefinierten Gruppen zugewiesen werden können. Daraufhin werden die vorverarbeiteten Lokationsdaten mittels Schichtung in einem Schritt S3 überlagert. Die Differenzierung und Einteilung in einem nächsten Schritt S4 führt dazu, dass die überlagerten vorverarbeiteten Lokationsdaten regionalisiert werden. Die Regionalisierung der geschichteten vorverarbeiteten Lokationsdaten geschieht in einer möglichen Ausführungsform mittels Mustererkennung. In einem darauffolgenden Schritt S5 werden die regionalisierten Lokationsdaten analysiert, wobei die Analyse S5 durch ein Analysemodul durchgeführt wird. In einer möglichen bevorzugten Ausführungsform umfasst das Analysemodul eine LISA Markov Abfolge. Basierend auf den Ergebnissen der Analyse werden Befehlsdaten in einem Schritt S6 erzeugt, wobei die Befehlsdaten geografische Referenzdaten umfassen, die mit einer Zeitkomponente gekoppelt sind. Ein letzter Schritt S7 des erfindungsgemässen Verfahrens umfasst eine Visualisierung der verarbeiteten und analysierten Lokationsdaten. Die Visualisierung erfolgt erfindungsgemäss als Mapping, wobei das Mapping eine interaktive bewegbare Raum- und Zeitdarstellung umfasst. Das Mapping ermöglicht eine Schnittstelle, ohne diese die analysierten Lokationsdaten nicht sinnvoll an einen Benutzer ausgegeben werden könnten. Im Rahmen der Erfindung ist es möglich, die Daten in jedem der Schritte S1 bis S2 einem zusätzlichen Datenkontroll- oder Datenbereinigungsschritt zu unterziehen.

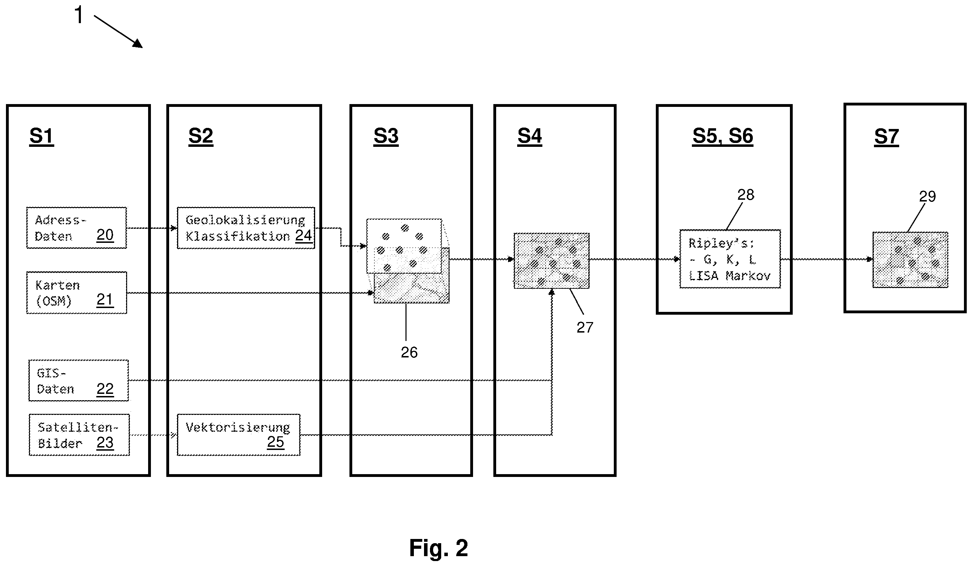

**Fig. 2** zeigt eine erfindungsgemässe Ausführung des Verfahrens 1 gemäss Fig. 1. Der erste Schritt S1 der Abfolge beinhaltet in dieser Ausführungsform das Einlesen von Lokationsdaten aus mehr als einer Quelle, beispielsweise. Datenbanken. In einer möglichen Ausführungsform werden gemäss Fig. 2 Adressdaten 20, Karten in Form von Open Street Maps (OSM) 21, GIS-Daten 22 sowie Satellitenbilder 23 eingelesen, wobei Daten aus derartigen Datenbanken häufig zugänglich sind. In einem nächsten Schritt, nämlich der Vorverarbeitung S2 werden die Adressdaten 20 geokodiert und einer Gruppe zugewiesen. In dem in Fig. 2 dargestellten Beispiel, werden die Lokationsdaten geokodiert bzw. -lokalisiert 24 und gemäss einer vordefinierten Klassifikation einer Gruppe bzw. Rubrik zugewiesen. Die Daten der Satellitenbilder 23 werden im Schritt der Vorverarbeitung S2 durch eine Vektorisierung 25 vektorisiert, um eine spätere Überlagerung 26 im Schritt S3 der mehreren Datenschichten zu ermöglichen. Die Überlagerung 26 mittels Schichtung S3 umfasst im vorliegenden Beispiel gemäss Fig. 2 die Überlagerung 26 der vorverarbeiteten Adressdaten 20 mit den OSM-Karten 21 sowie einer hier nicht dargestellten wählbaren Filterebene. Anschliessend werden im Schritt S4 der Abfolge die geschichteten Adressdaten 20 und OSM-Karten 21 mittels Mustererkennung, GIS-Daten 22 und den vorverarbeiteten Satellitenbildern 23 gerastert bzw. regionalisiert. Unter Regionalisierung ist die Untergliederung oder Einteilung eines Raumes in kleinere Teilgebiete bzw. Regionen zu verstehen. Die Differenzierung und Einteilung im Schritt S4 umfasst eine Rasterung/ Regionalisierung 27 der geschichteten Adressdaten 20 und OSM-Karten 21, wobei eine vierdimensionale Clusterebene auf Basis der geschichteten Punkte- und Filterebene entsteht. Eine derartige resultierende Clusterebene umfasst mehrere Gruppen von Datenobjekten mit ähnlichen Eigenschaften. In möglichen Ausführungsformen kann die vierdimensionale Clusterebene geschäfts relevante Information wie Dichte eines Parameters, quantitative Dynamik sowie qualitative Dynamik eines Parameters und die Zeit als diskrete Variable umfassen. Nach Erstellung der vierdimensionalen Clusterebene werden die regionalisierten Lokationsdaten mittels Analysemodul analysiert. Die Analyse S5 mittels Analysemodul kann in einer möglichen Ausführungsform mittels einer Ripley-Funktion und/oder LISA («Local Indicators of Spatial Association») Markov Abfolge 28 ausgeführt werden. Letztere ist eine exploratorische Raum-Zeit-Analyse, welche anhand begrenzter Kenntnis der Vorgeschichte die Transition von einem Zustand eines Systems in einen anderen Zustand des Systems beschreibt anhand von Transitionswerten. Diese Transitionswerte beinhalten Informationen über die Transitionswahrscheinlichkeiten. Basierend auf den Ergebnissen der Analyse werden Befehlsdaten im Schritt S6 erzeugt, wobei die Befehlsdaten geografische Referenzdaten, die mit einer Zeitkomponente gekoppelt sind, umfassen, welche in einer Ausführungsform Standorte und deren Zustand (quantitative und qualitative Dynamik) zu gewissen Zeitpunkten (Zeit als diskrete Variable) sein können. In der in Fig. 2 dargestellten Ausführung der vorliegenden Erfindung können die geografischen Referenzdaten durch eine Kopplung, wobei die Kopplung mittels den Schritten S2 bis S6 erfolgt, der verschiedenen Daten, beispielsweise Adressdaten, OSM-Karten, GIS-Daten und Satellitenbilder, erzeugt werden. Die LISA Markov Abfolge eignet sich auch in weiteren möglichen Ausführungsformen zum Bestimmen von prosperierenden bzw. nicht prosperierenden Standorten, optimalen Geschäftsmixen für (Miss-) Erfolg eines Standortes, Geschäftshierarchien, von denen Prosperität abhängt, potenziellen Risiken im geografischen Umfeld und Weiteres. Der letzte Schritt S7 der Abfolge gemäss dem erfindungsgemässen Verfahren 1 in Fig. 2 beinhaltet eine interaktive bewegbare Visualisierung der Lokationsdaten in Form eines Mappings 29 auf einem Human Interface. Das Mapping ermöglicht eine zeit- und räumliche Manipulation der Daten, wobei eine zurückblickende sowie vorausblickende und intuitiv wahrnehmbare Darstellung erzeugt wird.

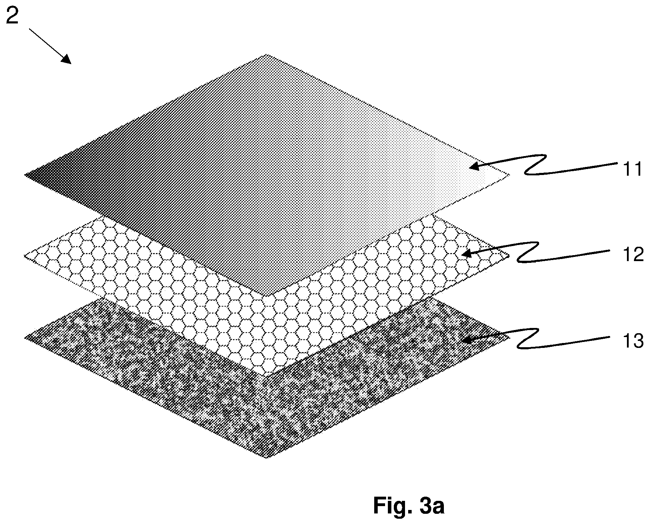

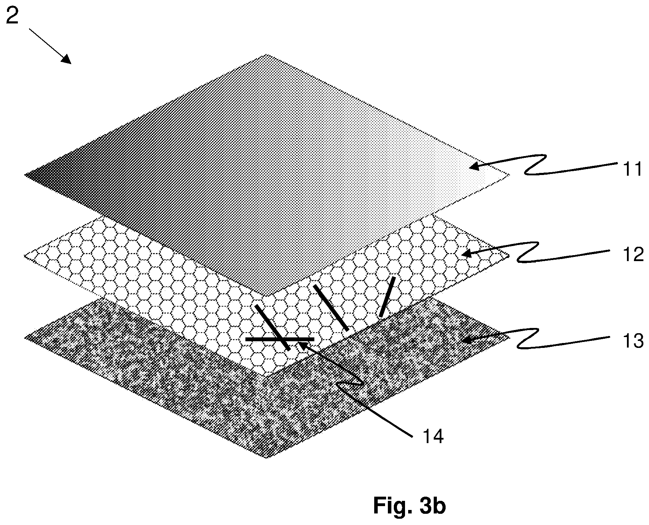

**Fig. 3a** und **Fig. 3b** zeigen eine schematische Ansicht der Überlagerung der mehreren Ebenen mittels Schichtung S3 gemäss dem erfindungsgemässen Verfahren 1. Geschichtete Lokationsdaten 2 enthalten hier drei Ebenen, nämlich eine Kartenebene 11, eine Punkteebene 12 und eine Filterebene 13. Die Kartenebene 11 dient als Orientierungsebene ohne analytische Bedeutung. In einer möglichen Ausführungsform kann die Kartenebene eine Open Street Map (OSM) sein. Die Punkteebene 12 beinhaltet die Daten, inklusive Koordinaten, der zu erforschenden Entitäten bzw. Einrichtungen. In einer möglichen Ausführungsform besteht die Punkteebene aus den Lokationsdaten von Geschäftslokalitäten, Parkplätzen, Haltestellen und/ oder ähnlichen Points-of-Interest (POI). Die Filterebene 13 erfüllt den Zweck des Filterns nach einem wählbaren Parameter. Bezugnehmend auf die bereits genannten Beispiele, kann die Filterebene 13 der Fig. 3 a, 3b die geschichteten Lokationsdaten nach Zeit, Geschäftsrubrik, Rechtsform und/ oder Weiterem filtern. In Fig. 3b sind die Verknüpfungen bzw. Verbindungen 14 einzelner Punkte der Punkteebene gezeigt. Dies kann in möglichen Ausführungen durch Merkmale wie Transaktionsmerkmale erfolgen. Weitere Möglichkeiten sind Verknüpfungen einzelner Entitäten derselben Rubrik, zum Beispiel Geschäfte, welche einer bestimmten Geschäftsrubrik angehören.

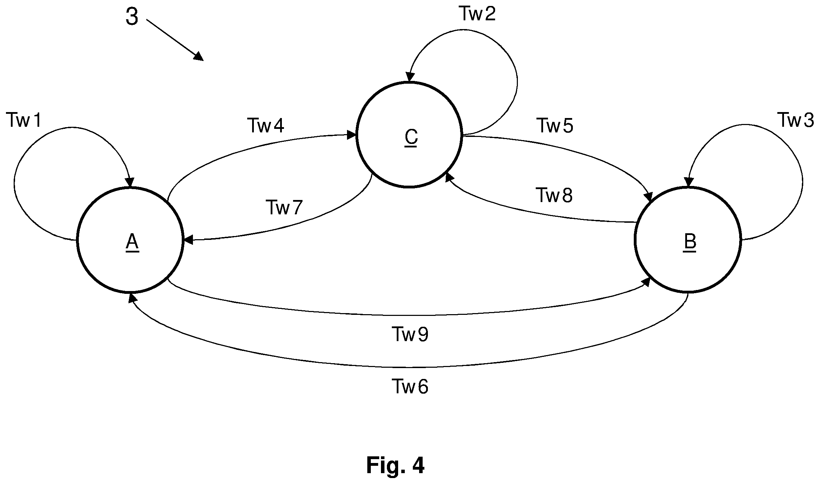

**Fig. 4** ist eine schematische Darstellung eines Markov-Prozesses 3. Gezeigt sind drei mögliche Zustände eines Systems, nämlich A, B und C. Mögliche Transitionen von einem Zustand in einen anderen Zustand sind mit Pfeilen dargestellt. Die Transitionen sind jeweils mit einem Transitionswert Tw(1) bis Tw(9) beschriftet. Zum Beispiel ist Tw4 der Transitionswert für die Transition von Zustand A nach Zustand C. Es besteht auch die Möglichkeit, dass sich ein Zustand wiederholt, wie durch Tw1, Tw2 und Tw3 dargestellt. Wie aus Fig. 4 ersichtlich, sind die Transitionen von einem Zustand in einen anderen Zustand nur von der unmittelbar vorher unternommenen Transition abhängig und ändert sich nicht, wenn zusätzliche Informationen über die vergangenen Transitionen miteinbezogen werden. Diese «gedächtnislose» Eigenschaft ist dem Markov-Prozess 3 zugrunde liegend und ermöglicht es Prognosen zu erstellen, ohne den gesamten Verlauf eines Systems zu kennen.

In einer möglichen Ausführungsform können erfolgreiche Geschäftsökosysteme und deren raumzeitlicher Verlauf über einen begrenzten Zeitraum als Referenz-Modelle mit Referenz-Mietern verwendet werden. So können Transitionswahrscheinlichkeiten einzelner Geschäfte und Mieter aus einem bzw. in einen Standort festgelegt werden und ein optimaler Geschäftsmix innerhalb des Standortes mittels Markov-Prozess 3 ermittelt werden.

In einer weiteren möglichen Ausführungsform kann das Analysieren der regionalisierten Lokationsdaten mittels einem LISA («Local Indicators of Spatial Association») Markov Abfolge ausgeführt werden. LISAs sind Indikatoren, welche auf lokale Cluster in der räumlichen Anordnung einer bestimmten Variablen hinweisen, und diese bewerten. Ein LISA weist zwei wichtige Merkmale auf, erstens liefert er eine Statistik für jeden Ort mit einer Bewertung der Signifikanz, und zweitens stellt es eine proportionale Beziehung zwischen der Summe der lokalen Statistiken und einer entsprechenden globalen Statistik her. Bei einer herkömmlichen Standortanalyse mittels Markov Prozess werden die Einflüsse lokaler Cluster mit höherer bzw. tieferer Variablendichte vernachlässigt. Vor allem bei der Anwendung der Geschäftsmietersuche haben lokale Cluster einen signifikanten Einfluss auf den Erfolg eines Geschäftsökosystems und sollten daher berücksichtigt werden.

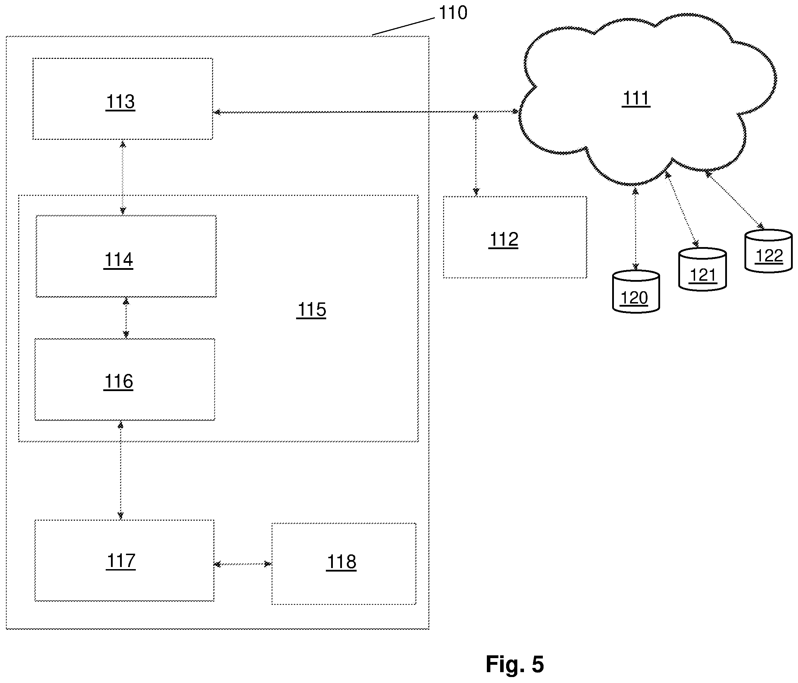

**Fig.** 5 zeigt eine schematische Darstellung eines Computersystems 110 mit Mitteln zur Ausführung des erfindungsgemässen Verfahrens 1. Das Computersystem 110 ist mit einem Netzwerk 111 verbunden, wobei das Netzwerk mindestens eine Datenbank bzw. vorteilhaft mehrere Datenbanken 120, 121, 122 enthält, welche Lokationsdaten beinhalten. Das Netzwerk 111 kann in einer möglichen Ausführungsform einem bekannten Netzwerktyp entsprechen. Weitere zusätzliche Datenbanken 112 können weitere Lokationsdaten bereitstellen, beispielsweise externe Offline-Datenbanken. Das Computersystem 110 umfasst ein Einlesegerät 113 zum Einlesen von Lokationsdaten aus mindestens einer Datenbank. Das Einlesegerät 113 umfasst ferner Mittel zum Erstellen von Listen aus Datenbanken, wie zum Beispiel POI-Listen. Das Einlesegerät 113 ist mit einem Vorverarbeitungsmodul 114 verbunden, welches die eingelesenen Lokationsdaten geokodiert und vordefinierten Gruppen zuweist. Das Vorverarbeitungsmodul 114 verfügt über Mittel zur Vektorisierung, mit welchem Bilderdaten vektorisiert werden können, sodass sie anschliessend zusammen mit den Lokationsdaten auf einer Karte dargestellt werden können. Das Computersystem 110 verfügt ferner über mindestens einen Prozessor 115, der unter anderem für die Differenzierung und Einteilung der geschichteten Lokationsdaten zu regionalisierten Lokationsdaten verwendet wird. Nach der Differenzierung und Einteilung, werden die regionalisierten Lokationsdaten mittels eines Analysemoduls 116 analysiert und basierend auf den Ergebnissen werden geografische Referenzdaten erzeugt, die mit einer Zeitkomponente gekoppelt sind. Das Analysemodul 116 weist Mittel zum Ausführen der bereits genannten Analysemethoden und Abfolgen, wie zum Beispiel eine LISA Markov Abfolge auf. Nebst den bereits genannten Bestandteilen verfügt das Computersystem 110 ferner über ein Ausgabegerät 117, dass mit einem Display 118 verbunden ist. Das Ausgabegerät 117 mit Display 118 ermöglicht eine interaktive bewegbare Raum- und Zeitdarstellung der geografischen Referenzdaten, welche eine optimierte, intuitive und interaktive Wahrnehmbarkeit für das Bedienperson ermöglicht.

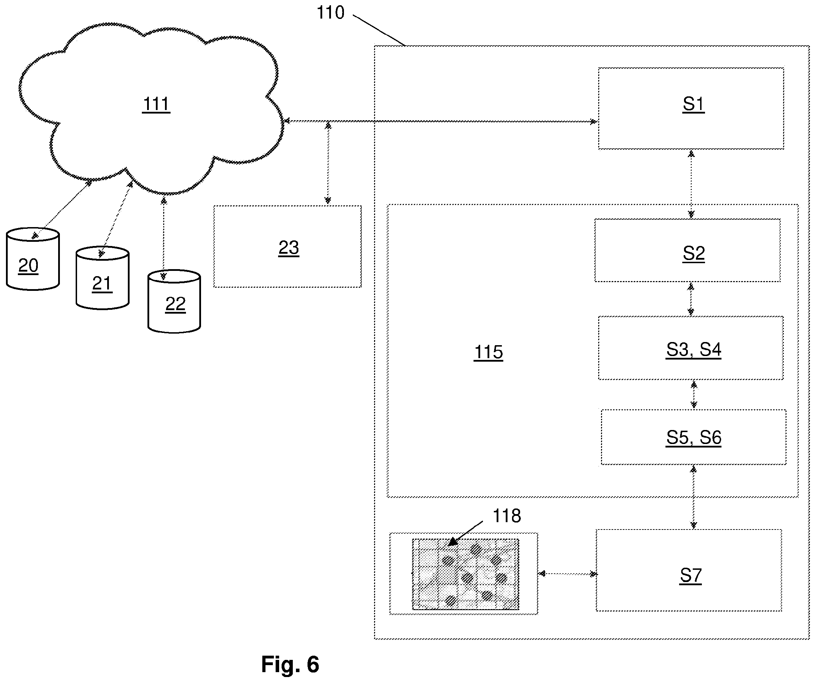

**Fig. 6** zeigt eine mögliche Ausführungsform des Verfahrens und Systems gemäss Fig. 5. In der dargestellten Ausführung werden Lokationsdaten in Form von Adressdaten 20, OSM-Karten 21 und GIS-Daten 22 aus dem Netzwerk 111 durch das Einlesegerät 113 des Computersystems 110 im Schritt S1 eingelesen. Zusätzlich werden vorteilhafterweise Satellitenbilder 23 aus einer zusätzlichen Datenbank 112 eingelesen, wobei diese zusätzliche Quelle in einer möglichen Ausführungsform eine Offline-Datenbank sein kann. Der Prozessor 115 ist in dem dargestellten Beispiel für die Ausführung der Schritte S2 bis S6 vorgesehen. Der Schritt der Vorverarbeitung S2 enthält hier das Geokodieren und das Vektorisieren der Daten, das Analysieren S5 und das Erzeugen von Befehlsdaten S6, wobei der Prozessor 115 zudem für die Schritte der Überlagerung S3 und der Differenzierung und Einteilung bzw. Rasterung und Regionalisierung S4 vorgesehen und ausgestattet ist. Anschliessend erfolgt die Visualisierung durch das Ausgabegerät 117, wobei in Fig. 6 eine vorteilhafte Visualisierung auf einem Display 118 dargestellt ist.

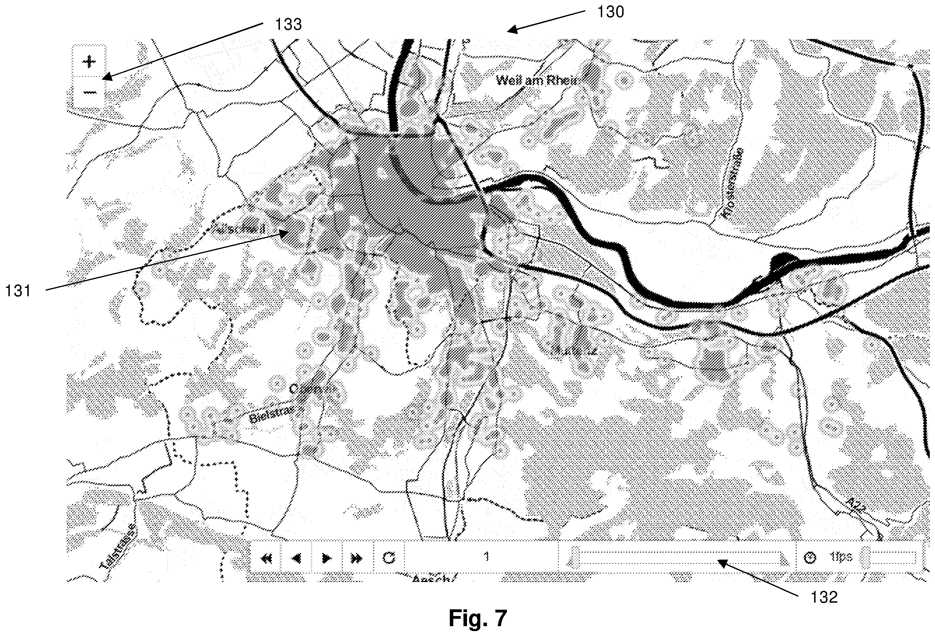

**Fig. 7** ist eine vorteilhafte Ausführungsform der Visualisierung von Lokationsdaten in einem Rendering in der Form eines Mappings. Ein Daten-Rendering 130 ist als interaktive bewegbare Karte realisiert, welche die Dichte eines Parameters 131 an einem Standort als Funktion der Zeit darstellt, wobei eine Zeitkomponente 132 in einer interaktiven bewegbaren Leiste vom Benutzer manipuliert werden kann. Der Standort in dem dargestellten Beispiel entspricht einer Schweizer Innenstadt. Eine Zoom-Funktion 133 ist auch in der interaktiven bewegbaren Visualisierung vorhanden, sodass der Benutzer das Gebiet von Interesse selbst anpassen kann. Auf diese Weise wird die Darstellung der komplexen Dateninformation für eine Bedienperson ermöglicht.

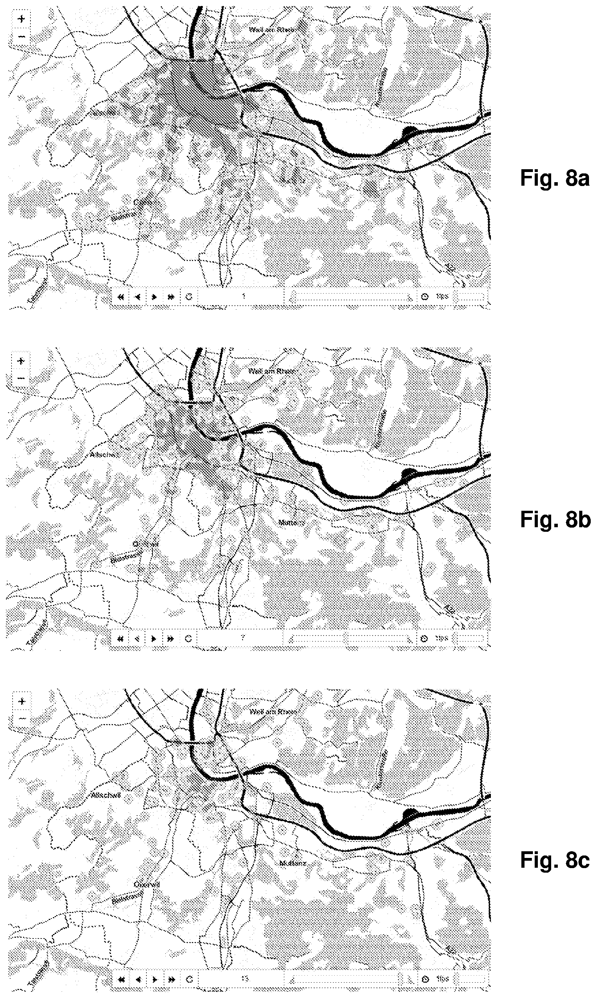

**Fig. 8a bis 8c** zeigen eine Visualisierung in einem Rendering in Form eines Mappings 29 von Daten bezüglich eines Standortes. Fig. 8a, 8b und 8c zeigen die Dichte eines Parameters in den Jahren 2009, 2016 und 2020 respektive. Dieses Daten-Rendering ist in der dargestellten Ausführungsform eine Visualisierung, die als interaktive Schnittstelle dient, durch welche die Lokationsdaten dem Benutzer in einer verständnisvollen Weise übermittelt werden können. Statische und dynamische Entitäten eines Standortes und deren raumzeitliche Entwicklungen können visualisiert und dadurch auch deren Synergiewirkung ermittelt werden. Diese Entitäten können in den in Fig. 8a bis 8c dargestellten Beispielen Geschäfte einer vordefinierten Rubrik sein. Die drei Figuren veranschaulichen wie die Dynamik innerhalb eines Standortes mittels des Daten-Renderings (GUI) als Mapping 29 durch das Computersystem dem Benutzer übermittelt werden kann. Es ist deutlich zu sehen, wie die Dichte der Geschäfte einer vorbestimmten Geschäftsrubrik in der Basler Innenstadt im Laufe der Jahre abnimmt.

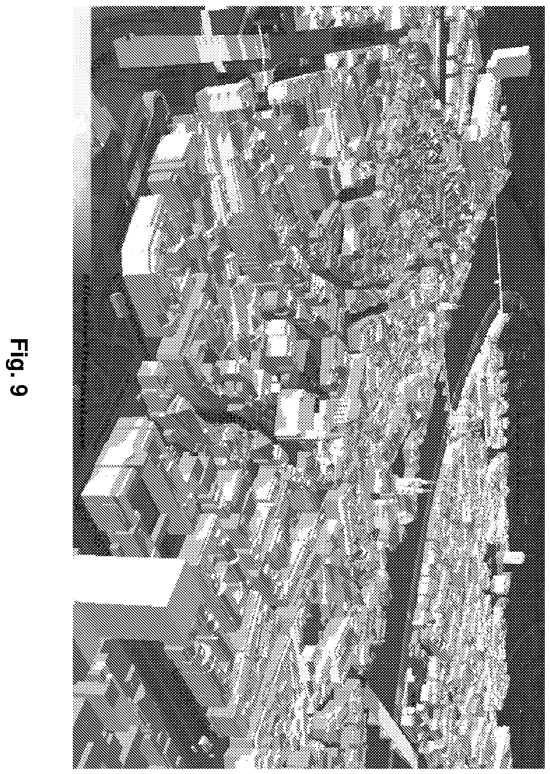

**Fig. 9** zeigt eine dreidimensionale Visualisierung von Lokationsdaten des Kantons Basel-Stadt (Datenquelle: CH-GIS). Standorte und die darin beinhalteten Liegenschaften sind realitätsnah wiedergegeben. Auf Basis dieser Visualisierung können Geschäftsökosysteme untersucht werden und deren Entwicklungen visuell dargestellt werden. Die 3D Darstellung der komplexen Dateninformation erlaubt hier weiterhin die zusätzliche Visualisierung von Lokalitätsebenen.

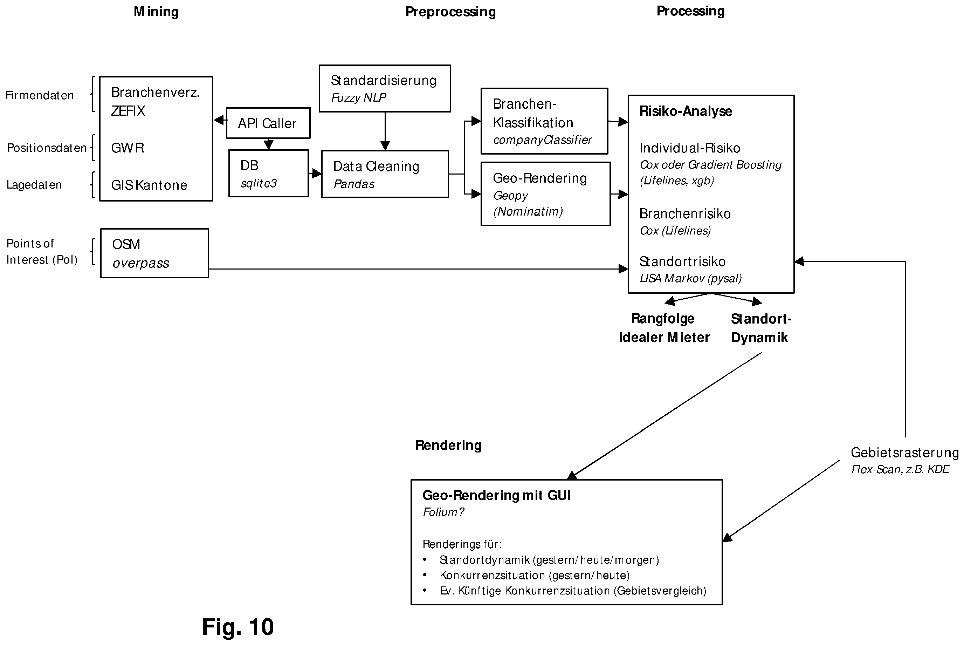

**Fig. 10** ist eine schematische Darstellung eines Datenverarbeitungsprozesses in einer möglichen Ausführung der vorliegenden Erfindung. Das Einlesen von Lokationsdaten ist in der dargestellten Ausführung durch ein Mining realisiert, wobei Lokationsdaten in Form von Firmen-, Positions- und Lagedaten eingelesen werden. Darüber hinaus können POI-Daten mittels OSM-Karten zur Verfügung gestellt werden. Die Programmierschnittstelle (API) verbindet das Einlesegerät 113 der Lokationsdaten mit einer Programmbibliothek, welche eine Datenbanksystem enthält (DB). Das Vorverarbeiten (Pre-processing) der Lokationsdaten umfasst im dargestellten Beispiel eine Standardisierung, Datacleaning bzw. Datenbereinigung, eine Klassifikation nach vordefinierten Gruppen (dargestellt: Branchenklassifikation) und eine Vorverarbeitung für das Rendering bzw. Georendering. Die in Fig. 10 dargestellte Risiko-Analyse im Processing-Schritt umfasst eine Analyse nach dem Individual-Risiko mittels Cox-regression oder Gradient Boosting, Branchenrisiko mittels Cox-Regression sowie Standortrisiko mittels LISA Markov Abfolge. Eine derartige Analyse ermöglicht es Standortdynamiken genauer zu untersuchen, sowie eine Rangfolge idealer Mieter basierend auf der Risiko-Analyse bereitzustellen. Letztlich können die analysierten Daten als Geo-Rendering mit einer Graphic User Interface (GUI) auf einem Display 118 visualisiert werden. Eine Gebietsrasterung ist hier auch vorgesehen, wobei diese beispielsweise mittels Flex-Scan durchgeführt werden kann.

Die vorstehende Lösung eignet sich besonders gut im Zusammenhang mit der folgenden technischen Offenbarung.

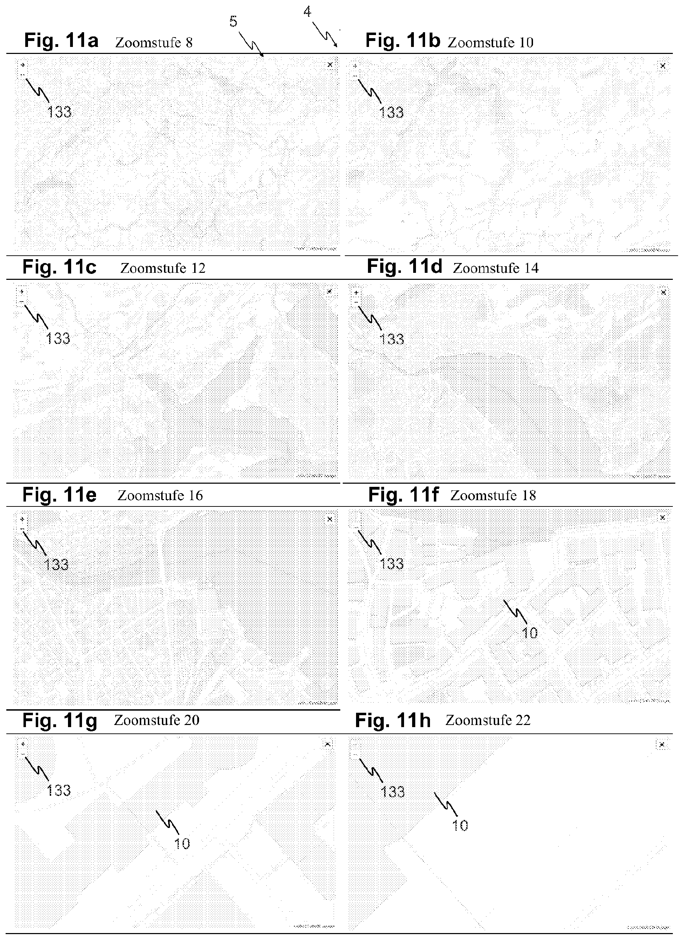

Ein erfindungsgemässes Verfahren ermöglicht eine automatische Anpassung des Informationsgehalts einer Kartendarstellung **in** Abhängigkeit verschiedener Zoomstufen. Eine erste Schicht 11 (vgl. Fig. 3a, 3b), auch Navigationsebene oder «Base Layer» genannt, der mehrschichtigen interaktiven Kartendarstellung 4 (vgl. Fig. 11a bis 11h) ist in einer bevorzugten Ausführungsform eine geografische Karte, beispielsweise in Form einer öffentlich zugänglichen Open Street Map (OSM) Karte. OSM-Karten ermöglichen eine finite Anzahl an Zoomstufen von Level 0 bis Level 20, nämlich von einer gesamten Erdansicht (Level 0) bis hin zu einzelnen Gebäudeansichten (Level 20) und maschinell auch höher. Hierbei sind die OSM-Karten in einem Vektorkachelschema festgelegt. Die Anzahl Kacheln pro Zoomstufe nimmt mit zunehmender Zoomstufe zu und nimmt an Breite (in ° der geografischen Länge definiert) mit zunehmender Zoomstufe ab, wobei Level 0 lediglich eine Kachel und Level 20 bis zu 1 099 511 627 776 Kacheln enthält. Die Zoomstufen der OSM-Karten können auch anhand ihrer Massstäbe veranschaulicht werden, wobei Zoomstufe Level 0 in einer Kartendarstellung den Massstab 1:500 000 000 und Level 20 den Massstab 1:500 aufweist. In einer vorteilhaften Ausführung der vorliegenden Erfindung umfasst der Base Layer ferner eine Zeit-Komponente. Die Zeit-Komponente kann jedoch auch in einer weiteren möglichen Ausführung als eigene Navigationsebene realisiert werden, was vor allem bei mehreren Lokationsdatensätzen, welche über längere Zeiträume vorhanden sind, vorgesehen ist. Ausserdem kann die Zeit-Komponente in einer alternativen Ausführung in einer Filterebene 13 (vgl. Fig. 3a, 3b) umfasst sein, also als ein Zeitfilter realisiert werden, wobei der Zeitfilter die zeitliche Entwicklung rück- und vorausblickend untersuchen lässt.

Fig. 11**a bis 11h** zeigen eine erfindungsgemässe, mehrschichtige und interaktive Visualisierung von Lokationsdaten in Form einer Kartendarstellung 4, nämlich einer OSM-Karte, mit verschiedenen Zoomstufen in einer grafischen Benutzerschnittstelle (GUI). Fig. 11a zeigt einen Ausschnitt der OSM-Karte in der GUI mit Zoomstufe 8 (Massstab 1:2 000 000), in welchem die ganze Schweiz zu sehen ist, wobei die Zoomstufe in den darauffolgenden Fig. 11b bis 11h in Zweierschritten zunehmen. In Fig. 11e mit Zoomstufe 16 (Massstab 1:8 000) ist die Kartendarstellung 4 auf die Stadt Luzern beschränkt, während Fig. 11h mit Zoomstufe 22 (Massstab 1:250) lediglich ein Gebäudeabschnitt innerhalb der Stadt Luzern darstellt. Die von einem Benutzer selektierte Fläche 5 kann in der Ausführungsform aus Fig. 11a bis 11h mittels einer Zoom-Funktion 133 angepasst werden. Anhand der Fig. 11a bis 11h ist ersichtlich, dass sämtliche zu beobachtende Informationswechsel in OSM-Karten, und anderen Visualisierungen aus dem Stand der Technik, lediglich der Regelung der kartografischen Informationsdichte mit gleichbleibendem kartografischem Daten- und Zeichenmodell dienen. Demgegenüber ändern sich in dem vorliegenden Verfahren die strukturellen Merkmale und damit das Daten- und Zeichenmodell der mehrschichtigen interaktiven Kartendarstellung. Die Kartendynamik führt also zu einer Serie sich verändernder Themenkarten.

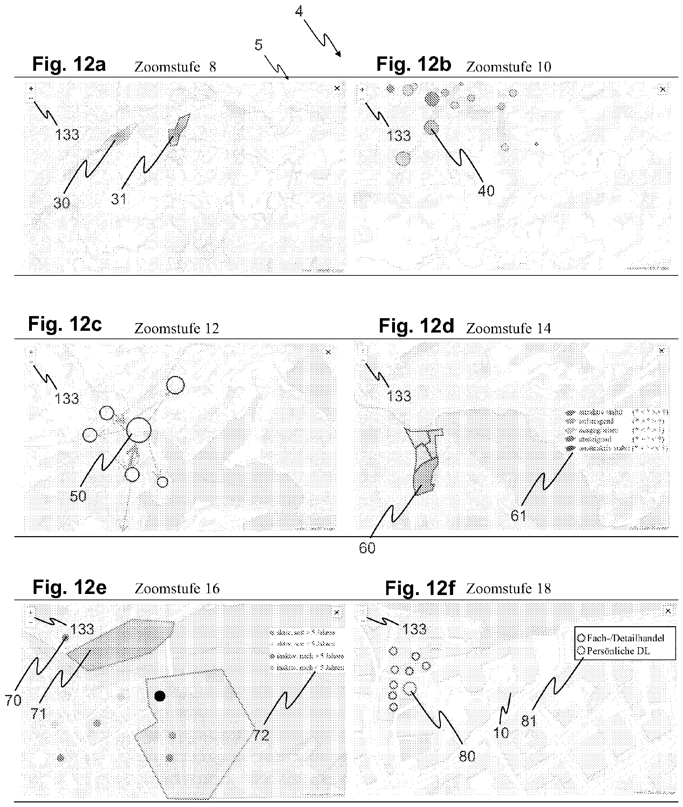

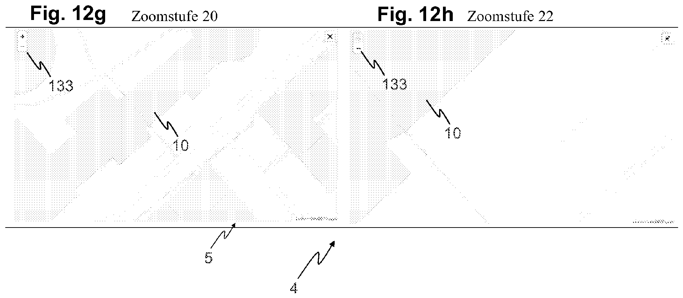

**Fig. 12a bis 12h** zeigen eine vorteilhafte Ausführungsform einer mehrschichtigen interaktiven Visualisierung von Lokationsdaten in Form einer Kartendarstellung 4, auch Mapping 29 genannt, mit automatischem Informationswechsel und mit verschiedenen Zoomstufen in einer grafischen Benutzerschnittstelle (GUI). Der Base Layer in den Fig. 12a und 12b sind hierbei die OSM-Karten der Jahre 2007 bis 2022 und Fig. 12c bis 12h OSM-Karten der Jahre 2007 bis 2030. Die Navigationsebene in Form von OSM-Karten, mit Ausnahme der Zeit-Komponente, bilden dieselben kartografischen Flächenausschnitte wie Fig. 11a bis 11h ab. Fig 12a bis 12h zeigen jeweils den automatisch wechselnden Informationsgehalt der Informationsebene 12 der Kartendarstellung 4 in den verschiedenen Zoomstufen, welcher der vorliegenden Erfindung zugrunde liegt. Die dargestellte, von einem Benutzer selektierte, Fläche 5 und somit auch die dargestellte Zoomstufe ist ebenfalls mittels der Zoom-Funktion 133 anpassbar. In Zoomstufe 8 sind nationale Entwicklungen wie Cluster-Bildungen einer Branche erkennbar. Beispielsweise ist ein Cluster 31 rund um den Kanton Zürich und ein weiterer Cluster 30 im Norden des Kantons Bern/ Solothurn zu sehen. Fig. 12b hingegen weist die Zoomstufe 10 auf mit Massstab 1:500 000 und einem Perimeter, welcher auf Agglomerations-Entwicklungen zurückführen lässt. Agglomerations-Entwicklungen dieser Art gewähren einen Einblick in Branchen-Dynamiken 40 auf Agglomerationsebene. In der nächsten Fig. 12c ist der Perimeter auf regionale Entwicklungen heruntergesetzt, wobei die mehrschichtige interaktive Kartendarstellung einen Massstab von 1:150 000 aufweist. Diese regionalen Entwicklungen könnten unter anderen Verlagerungen von Unternehmen/ Firmen-Mobilität 50 repräsentieren. Fig. 12d mit Zoomstufe 14 zeigt hingegen bereits lokale Entwicklungen, wobei unter anderen lokale Geschäftsökosysteme 60 und deren Entwicklungen veranschaulicht werden können. In der Visualisierung ist darüber hinaus eine interaktive erste Leiste 61 zu sehen, welche Zusatzinformationen zu den dargestellten Informationsgehalt anzeigt. Zoomstufe 16 in Fig. 12e widerspiegelt Entwicklungen auf einem Massstab 1:8 000, beispielsweise Quartier-Entwicklungen in Hinsicht auf einzelne Geschäfte 70. In Bezug auf die Standortanalyse können auf dieser Zoomstufe Geschäftsökosystem-Konkurrenzverhältnisse 71 mittels geeignetem Farbschema visualisiert werden. Die zweite Leiste 72 in Fig. 12e zeigt ein Farbschema an, welches die Geschäftsökosystem-Konkurrenzverhältnisse anhand von Aktivitäts- bzw. Inaktivitätsdauer einzelner Geschäfte innerhalb eines Geschäftsökosystems unterteilt. Die Kartendarstellung in Fig. 12f weist einen Perimeter in der Grössenordnung eines Passanten-Radius auf, welcher Schlussfolgerungen in Hinsicht auf die Attraktivität einer Lage 80, beispielsweise für ein Geschäft einer bestimmten Branche an einer bestimmten Strassenkreuzung, ermöglicht. Die dritte Leiste 81 in Fig. 12f gibt an, um was für ein Objekt 10 oder Geschäft 70 in der Kartendarstellung 4 zu sehen ist. Die Situation eines einzelnen Objekts 10 bzw. Gebäudes lässt sich in der Zoomstufe 22, welche in Fig. 12g zu sehen ist, darstellen. Hier können beispielsweise die Geschäfts- und Mieterökosysteme eines Objekts 10 untersucht werden und deren kurz- und langfristige Erfolgschancen prognostizieren. Fig. 12h zeigt mit Zoomstufe 22 einen Abschnitt eines Objekts 10, also beispielsweise nur eine Strassenseite und somit ggf. nur einen Teil der Mieter und Geschäfte des Objekts 10.

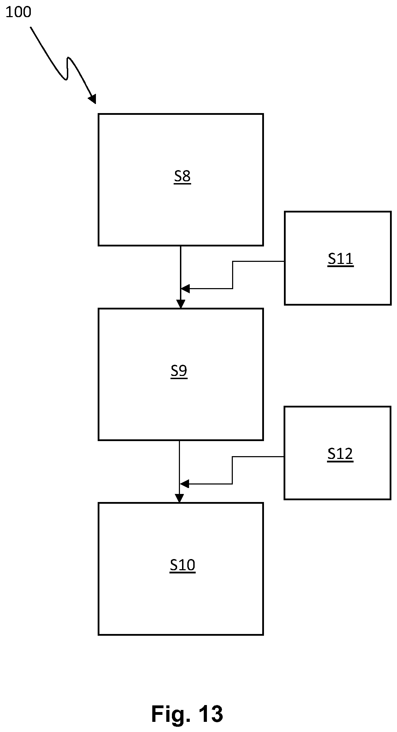

**Fig. 13** ist eine schematische Darstellung eines erfindungsgemässen Verfahrens 100 zur Visualisierung von Lokationsdaten in einer grafischen Benutzerschnittstelle (GUI). Das Verfahren 100 umfasst in einem ersten Schritt S8 das Bereitstellen von geschichteten, geokodierten Lokationsdaten aus mindestens einer Datenbank in einer mehrschichtigen interaktiven Kartendarstellung 4 mit Informationsgehalt in der GUI. Die Lokationsdaten können hierbei aus einer Vielzahl von geeigneten Quellen bezogen werden und mittels erfindungsgemässer Vorverarbeitung geokodiert werden. In einem nächsten Schritt S9 wird eine von einem Benutzer selektierten Fläche 5 der mehrschichtigen interaktiven Kartendarstellung 4 bestimmt. Der Benutzer kann die Fläche mittels der Zoom-Funktion 133, einer Such-Funktion, Filter-Funktionen und/ oder weiteren dem Fachmann bekannten Lösungen selektieren. In Abhängigkeit der vom Benutzer selektierten Fläche 5 wird in einem darauffolgenden Schritt S10 der Informationsgehalt und die strukturellen Merkmale mindestens einer Schicht der mehrschichtigen interaktiven Kartendarstellung 4 angepasst. Die Anpassung S10 mindestens einer Schicht der mehrschichtigen interaktiven Kartendarstellung 4 bewirkt hierbei eine automatische Veränderung der angezeigten Lokationsdaten, welche mit mindestens einem Parameter assoziiert sind, und somit den Informationsgehalt der Kartendarstellung 4. In einer weiteren alternativen Ausführungsform kann unter Einbezug S11 zusätzlicher Lokationsdaten die mehrschichtige interaktive Kartendarstellung 4 als 3-dimensionale Kartendarstellung ausgeführt werden. Der Einbezug S11 zusätzlicher Lokationsdaten ist hierbei vor dem Bestimmen der selektierten Fläche S9 vorgesehen, vorteilhafterweise zeitgleich wie das Bereitstellen S8 der restlichen Lokationsdaten wie in Fig. 13 dargestellt. Gemäss noch einer weiteren erfindungsgemässen Ausführung umfasst die Anpassung S10 mindestens einer Schicht der mehrschichtigen interaktiven Kartendarstellung 4 in Abhängigkeit der vom Benutzer selektierten Fläche 5 eine Gewichtung und ein Ein-, Aus- oder Überblenden S12 einzelner Schichten der mehrschichtigen interaktiven Kartendarstellung 4. Das Ein-, Aus- oder Überblenden S12 einzelner Schichten kann mittels einer Filterfunktion manuell oder sprachgesteuert kontrolliert werden, kann jedoch auch automatisch bei einer Veränderung des dargestellten kartografischen Flächenausschnitts geschehen.

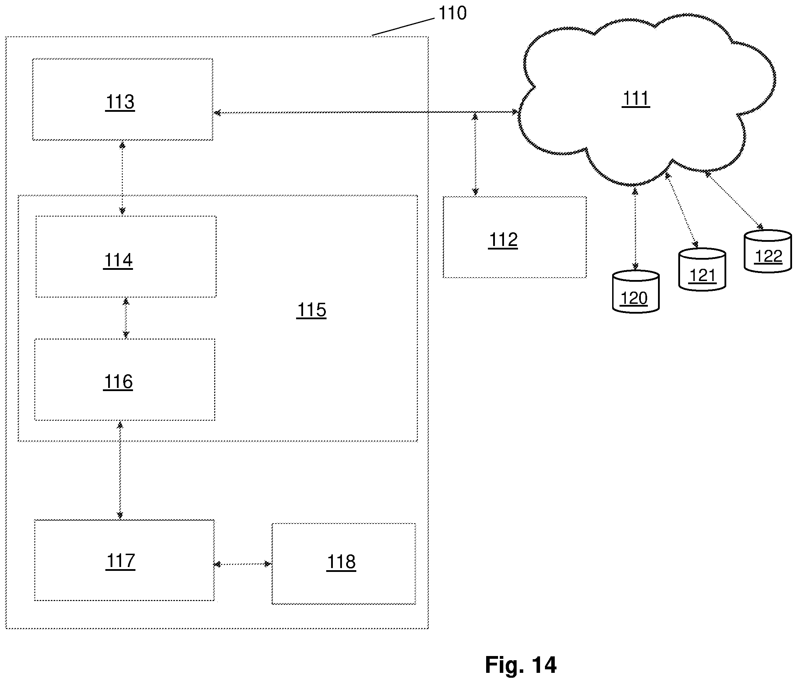

**Fig. 14** zeigt eine schematische Darstellung eines Computersystems 110 mit Mitteln zur Ausführung eines erfindungsgemässen Verfahrens. Das Computersystem 110 ist mit einem Netzwerk 111 verbunden, wobei das Netzwerk mindestens eine Datenbank bzw. vorteilhaft mehrere Datenbanken 120, 121, 122 enthält, welche Lokationsdaten beinhalten. Das Netzwerk 111 kann in einer möglichen Ausführungsform einem bekannten Netzwerktyp entsprechen. Weitere zusätzliche Datenbanken 112 können weitere Lokationsdaten bereitstellen, beispielsweise externe Offline-Datenbanken. Das Computersystem 110 umfasst ein Einlesegerät 113 zum Einlesen von Lokationsdaten aus mindestens einer Datenbank. Das Einlesegerät 113 umfasst ferner Mittel zum Erstellen von Listen aus Datenbanken, wie zum Beispiel POI-Listen. Das Einlesegerät 113 ist mit einem Vorverarbeitungsmodul 114 verbunden, welches die eingelesenen Lokationsdaten geokodiert und vordefinierten Gruppen zuweist. Das Vorverarbeitungsmodul 114 verfügt über Mittel zur Vektorisierung, mit welchem Bilderdaten vektorisiert werden können, sodass sie anschliessend zusammen mit den Lokationsdaten auf einer Karte dargestellt werden können. Das Computersystem 110 verfügt ferner über mindestens einen Prozessor 115, der unter anderem für die Differenzierung und Einteilung der geschichteten Lokationsdaten zu regionalisierten Lokationsdaten verwendet wird. Nach der Differenzierung und Einteilung, werden die regionalisierten Lokationsdaten mittels eines Analysemoduls 116 analysiert und basierend auf den Ergebnissen werden geografische Referenzdaten erzeugt, die mit einer Zeitkomponente gekoppelt sind. Das Analysemodul 116 weist Mittel zum Ausführen der bereits genannten Analysemethoden und Abfolgen, wie zum Beispiel eine LISA Markov Abfolge auf. Nebst den bereits genannten Bestandteilen verfügt das Computersystem 110 ferner über ein Ausgabegerät 117, dass mit einem Display 118 verbunden ist. Das Ausgabegerät 117 mit Display 118 ermöglicht eine interaktive bewegbare Raum- und Zeitdarstellung der geografischen Referenzdaten, welche eine optimierte, intuitive und interaktive Wahrnehmbarkeit für die Bedienperson ermöglicht. Das Computersystem 110 kann weiterhin ein Beobachtungssystem, beispielsweise eine Kamera (nicht dargestellt) umfassen. Die Anpassung des Informationsgehalts der mehrschichtigen interaktiven Kartendarstellung (4) kann dann in Abhängigkeit vom Benutzerverhalten mittels des Beobachtungssystems erfolgen.

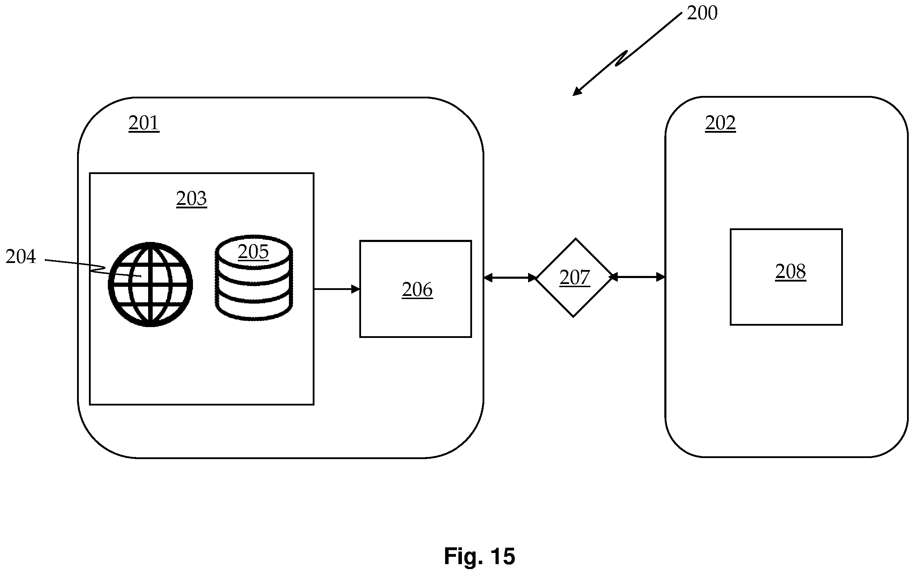

**Fig. 15** zeigt eine mögliche Systemarchitektur eines erfindungsgemässen Computersystems 200, beispielsweise eines Systems zum sog. «Tenant-matching», d.h. Mieterabgleich. Das Computersystem 200 besteht aus einer Back-End- 201 und einer Front-End-Applikation 202. Die Back-End-Applikation 201 sammelt und analysiert Daten, das Front-End 202 erstellt aus den Daten interaktives Kartenmaterial und stellt eine Aufgaben-Steuerung zur Verfügung. Hierbei kann die Front-End-Applikation 202 als containerisierte Desktop-Applikation oder als Widget (Minianwendung mit Engine) bei einem Benutzer installiert werden. In einer vorteilhaften Ausführung ist die Schnittstelle zwischen der Back-End- und der Front-End-Applikation als eine Application Programming Interface (API) 207 ausgebildet.

Die Daten-Sammlung 203 der Back-End-Applikation 201 erfolgt in einer möglichen Ausführung mittels Mining-Algorithmus, vorteilhafterweise ein rekursiver Mining-Algorithmus. Dieser führt in regelmässigen Abständen Datenbank- 205 und Webabfragen 204 aus, beispielsweise mittels API, SPARQL- und/ oder Scraper-Algorithmen. Firmendaten sowie Daten aus Geografischen Informationssystemen (GIS) können abgefragt werden. Eine Preprocessing-App sucht nach Dateninkonsistenzen und -lücken («missing- / outlier- / faulty values») und initialisiert eine nächste Datenabfrage-Iteration, um Lücken und Ausreisser oder Datenfehler (z.B. fehlerhafte Schreibweise der Firmenadresse) nach «best effort» Prinzip zu korrigieren. Die Daten werden als raumzeitliche Objekte,, insbesondere in HOLAP-Technologie (Hybrid Online Analytical Processing), organisiert, sodass das Verhalten verschiedener Objektklassen, beispielsweise Firmen, Liegenschaften, Firmennetzwerke, Gewerbegebiete, Wirtschafts-struktur einer Region oder eines Kantons usw., modelliert werden kann.

Eine mögliche nachfolgende Datenanalyse 206 kann auf einer Neuro-Fuzzy-Architektur basieren, welche eine Kombination von Deep Learning und einem Inferenz-System ist, wobei diese Architektur robustes Lernen in sich rasch verändernden räumlichen Strukturen und eine höchstmögliche Toleranz bezüglich Dateninkonsistenz erlaubt. Die Datenanalyse 206 sucht nach Mustern in der geografischen Verteilung von Firmen im Zeitverlauf. Diese Mustererkennung ermöglicht es, vergangene Entwicklungen aufzuzeigen (Back-Casting), gegenwärtige Wirtschaftsstrukturen darzustellen (Now-Casting) und eine Prognose über deren zukünftige Entwicklung abzugeben (Fore-Casting). Erkenntnisziel einer derartigen Analyse ist die Antizipation von Veränderungen in der lokalen Wirtschaftsstruktur und Nutzung dieser Erkenntnisse, um z.B. optimale Mietverträge abschliessen zu können, Immobilienportfolios zu restrukturieren oder Gewerbeansiedlungen zu steuern. Die Mustererkennung und -vorhersage basiert auf vier prädiktiven bzw. normativen Algorithmen, nämlich Survival Regression, LISA Markov, Co-Location Mining und Extended Machine Learning. Mittels Survival Regression werden Überlebensprognosen für potenzielle Gewerbemieter erstellt, wobei vor allem interessiert, wie hoch die Wahrscheinlichkeit ihres Fortbestands ist, wann bei negativer Prognose die Insolvenz zu erwarten ist und, im Falle einer günstigen Prognose, wie hoch die Chance für eine Domizilverlegung an einen anderen Standort ist (Competing Risks Analysis). Mittels Co-Location-Mining werden räumliche Wechselwirkungen zwischen Firmen untersucht, um beispielsweise Auskunft darüber zu erhalten, welche lokale Auswirkung der Zu- oder Wegzug einer Firma bzw. eines Firmentyps hat. Als Besonderheit werden erstmals sowohl ein Spatial Positive- und ein Spatial Negative Co-Location Pattern Directional Mining Algorithmus parallel verwendet, um strukturelle Faktoren für erfolgreiche bzw. nicht erfolgreiche Gewerbemixe im Einschluss- und Ausschlussverfahren zu ermitteln. Diese Anwendung kann mit den Prognosedaten aus der Survival-Regression und der Markov-Ketten erstmals künftige Co-Location-Muster vorhersagen. Da Immobilienbesitzer oder Arealentwickler konkrete Hinweise brauchen, mit welchem Firmentyp, oder noch konkreter, mit welcher Firma sie ein Mietverhältnis eingehen sollen, werden die «association rules», also Assoziationsregeln des Co-Location Miners, d.h. die entdeckten Regeln, nach denen lokale Strukturveränderungen ablaufen, mittels Extended Machine Learning durch sog. «action rules», auch Handlungsregeln, ergänzt, welche aus den Standortentscheiden bestimmter Firmentypen bzw. einzelner Firmen spezifische Regeln zum Standortverhalten von Firmen ableiten. Aus der Kombination dieser individuellen «action rules» und den kollektiven «association rules» wird ein sog. Recommender-System gebildet, das dem Immobilienbesitzer bzw. Arealentwickler konkrete Vorschläge macht, welche Firmen er für sein Objekt gewinnen soll.

Die Front-End-Applikation 202 stellt dem Benutzer eine interaktive Visualisierung 208 der Wirtschaftsstrukturen zur Verfügung. Um die Daten raumzeitlich, d.h. in ihrer vergangenen, gegenwärtigen und zukünftigen räumlichen Verteilung darzustellen, werden sie als interaktive, autoadaptive Karten dargestellt. Beispielsweise können pro Land alle Firmen und mit ihnen alle Firmenstandorte erhoben werden. Um einen optimalen Nutzen aus dieser grossen Datenmenge zu ziehen, werden die Karten zusätzlich zu ihrer temporalen Animation auch thematisch animiert. Je nach Kartenauflösung werden die jeweils aussagekräftigsten wirtschaftsstrukturellen Phänomene dargestellt. Bei kleinem Zoomfaktor lassen sich z.B. die Leistungsveränderungen im Tertiärsektor oder regionale Deindustrialisierung zeigen, bei grossem Zoomfaktor die Entwicklung eines Businessparks oder die lokale Konkurrenzsituation eines spezifischen Gewerbes. Über Split-Screen-Darstellungen können komparative Vergleiche zwischen mehreren Regionen, Businessparks oder Immobilienstandorten gemacht werden. In allen genannten Fällen sind auch prognostische Darstellungen (zeitliche Simulation) oder hypothetische Darstellung (strukturverändernde Simulation, z.B. Annahme eines Zu- oder Wegzug von Schlüsselfirmen) möglich. Eine Abfrageeinheit erlaubt es, Aufgaben an das System zu stellen, z.B. eine Mieterempfehlung für ein Objekt oder eine Prognose zur Veränderung der Wirtschaftsstruktur in der Kernzone einer Lokation.

In einer weiteren Ausführungsform umfasst die Systemarchitektur eine Untersuchungseinheit «Areale» bzw. Ökosysteme. Diese wird auf der Basis ähnlicher Überlebenswahrscheinlichkeiten definiert und gibt die positive/negative Dynamik bzw. Stabilität eines Standorts wieder. Um Prognosen zur künftigen Dynamik/ Stabilität abzugeben, werden Hidden Markov Chains, insbesondere LISA-Markov-Chains verwendet.

Eine weitere mögliche Untersuchungseinheit ist das «Co-Location-Pattern-Mining» im besagten Gebiet, d.h. die Verfolgung sich laufend verändernder Geschäftskonstellationen, welche die kollektive Überlebenswahrscheinlichkeit am Standort mitbestimmen. Es werden positive und negative Muster untersucht, wobei eine negative Co-Location auf ein Verdrängungseffekt hinweist. Beispielsweise wurde in einer Pilotuntersuchung festgestellt, dass grosse Firmen Restaurants aus Industriezonen verdrängt werden, weil sie zunehmend eigene Kantinen betreiben. Co-Location Mining wird mit einem selbst-adaptiven Neuro-Fuzzy-System (SANFS) betrieben, welches die Lernfähigkeit Neuronaler Netze mit der Fehler- und Ungenauigkeitstoleranz eines Inferenz-Systems kombiniert. Da Co-Location-Mining sehr rechenintensiv ist, wird ein Spatio-Temporal Adaptive Resolution Encoding (STARE) eingesetzt, welches die zeiträumliche Anordnung der Daten auch im Computer-Memory nachvollzieht, um Kalkulationen mit einem Minimum an Datenbewegungen ausführen zu können.

Ein erfindungsgemässes System weist in einer möglichen Ausführungsform folgende Systemeigenschaften auf:

| | |
|---|---|
| Betriebssystem: | Linux |
| Webserver: | Flask |
| Laufzeitumgebung: | Python |
| Datenpersistenz: | SQLITE |
| Programmiersprache: | Python, R, CLP |
| IDE: | Spyder |
| Container: | Docker. |

Die vorliegende Erfindung zeigt ein Verfahren zur Erfassung, Verarbeitung und Darstellung von Lokationsdaten sowie ein Computersystem. Es versteht sich von selbst, dass für einen Fachmann zahlreiche weitere Ausführungsformen anhand der exemplarisch beschriebenen Ausführungsbeispiele denkbar sind.

### Bezugszeichenliste

- 1: Verfahren gemäss den unabhängigen Patentansprüchen
- 2: Überlagerung gemäss dem erfindungsgemässen Verfahren
- 3: Markov-Prozess
- 4: mehrschichtige interaktive Kartendarstellung
- 5: selektierte Fläche

- 10: Objekt
- 11: Kartenebene
- 12: Punkteebene
- 13: Filterebene
- 14: Verknüpfungen einzelner Punkte auf Punkteebene

- 20: Adress-Daten
- 21: Karten
- 22: GIS-Daten
- 23: Satellitenbilder
- 24: Geolokalisierung und Zeit-Klassifikation
- 25: Vektorisierung
- 26: Überlagerung der Karten- und Adressdaten
- 27: Regionalisierung
- 28: LISA Markov Abfolge
- 29: Mapping

- 30: Cluster 1
- 31: Cluster 2

- 40: Branche
- 50: Firmen-Mobilität

- 60: lokales Geschäftsökosystem
- 61: erste Leiste

- 70: Geschäft
- 71: Geschäftsökosystem-Konkurrenzverhältnis
- 72: zweite Leiste

- 80: Lage
- 81: dritte Leiste

- 100: Verfahren

- 110: Computersystem
- 111: Netzwerk
- 112: Zusätzliche Datenbank
- 113: Einlesegerät
- 114: Vorverarbeitungsmodul
- 115: Prozessor
- 116: Analysemodul
- 117: Ausgabegerät
- 118: Display

- 120: Datenbank 1
- 121: Datenbank 2
- 122: Datenbank 3

- 130: Daten-Rendering
- 131: Dichte eines Parameters
- 132: interaktive bewegbare Zeitkomponente
- 133: Zoom-Funktion

- 200: Weiteres Computersystem
- 201: Back-End
- 202: Front-End
- 203: Daten-Sammlung
- 204: Webabfragen
- 205: Datenbank
- 206: Daten-Analyse
- 207: API
- 208: Visualisierung

- A: Zustand A
- B: Zustand B
- C: Zustand C

- S1: Einlesen von Lokationsdaten
- S2: Vorverarbeitung
- S3: Überlagerung mittels Schichtung
- S4: Differenzierung und Einteilung
- S5: Analysemodul
- S6: Erzeugen von Befehlsdaten
- S7: Visualisierung
- S8: Bereitstellen von Lokationsdaten
- S9: Bestimmen einer selektierten Fläche
- S10: Anpassen des Informationsgehalts
- S11: Einbezug zusätzlicher Lokationsdaten
- S12: Ein-, Aus- oder Überblenden

- Tw1: Transitionswert (A|A)
- Tw2: Transitionswert (C|C)
- Tw3: Transitionswert (B|B)
- Tw4: Transitionswert (A|C)
- Tw5: Transitionswert (C|B)
- Tw6: Transitionswert (B|A)
- Tw7: Transitionswert (C|A)
- Tw8: Transitionswert (B|C)
- Tw9: Transitionswert (A|B)

## Patentansprüche

1. Verfahren zur Erfassung, Verarbeitung und Darstellung von Lokationsdaten, wobei das Verfahren die folgenden Schritte umfasst:
- Einlesen von Lokationsdaten (S1), die zumindest erste Lokationsdaten und zweite Lokationsdaten umfassen;
- Vorverarbeitung (S2) der ersten Lokationsdaten;
- Vorverarbeitung (S2) der zweiten Lokationsdaten;
- Überlagerung (S3) der vorverarbeiteten ersten Lokationsdaten und der vorverarbeiteten zweiten Lokationsdaten mittels Schichtung zu geschichteten Lokationsdaten;
- Differenzierung und Einteilung (S4) der geschichteten Lokationsdaten mittels Mustererkennung zu regionalisierten Lokationsdaten;
- Analysieren (S5) der regionalisierten Lokationsdaten mittels Analyse-Moduls, wobei das Analysieren (S5) der regionalisierten Lokationsdaten mittels Analyse-Moduls (116) auf exploratorischer Raum-Zeit-Basis erfolgt, und wobei das Analyse-Modul (116) eine LISA Markov Abfolge umfasst, die auf Cluster- und Filterebene durchgeführt wird; und
- Erzeugen von Befehlsdaten (S6) basierend auf den Ergebnissen der Analyse der regionalisierten Lokationsdaten, wobei die Befehlsdaten geographische Referenzdaten umfassen, die mit einer Zeitkomponente gekoppelt sind, und wobei die geographischen Referenzdaten auf einem Ausgabegerät mit Display durch eine interaktiv bewegbare Zeit- und Raumdarstellung (S7) ausgegeben werden.

2. Verfahren gemäss Anspruch 1, wobei die ersten und/oder zweiten Lokationsdaten mit mindestens einem Attribut assoziiert sind und das Einlesen (S1) der ersten und/oder zweiten Lokationsdaten ein Erstellen von Listen aus mindestens einer Datenbank (120-122, 112) umfasst.

3. Verfahren gemäss Anspruch 1 und 2, wobei die Vorverarbeitung (S2) der ersten und der zweiten Lokationsdaten eine Geokodierung sowie Zeitkodierung der Lokationsdaten umfasst sowie eine anschliessende Zuweisung der geokodierten Lokationsdaten zu vordefinierten Gruppen.

4. Verfahren gemäss einem der Ansprüche 1 bis 3, wobei die Überlagerung (S3) der vorverarbeiteten mindestens ersten und zweiten Lokationsdaten mittels Schichtung ferner umfasst:
a) Erstellen einer Kartenebene (11);
b) Erstellen einer Punkteebene (12); und
c) Erstellen einer Filterebene (13) umfasst.

5. Verfahren gemäss Anspruch 4, wobei die Differenzierung und Einteilung (S4) der geschichteten Lokationsdaten mittels Mustererkennung zu regionalisierten Lokationsdaten ein Erstellen einer mehrdimensionalen geografischen Clusterebene auf der Basis der Punkt- (12) und Filterebene (13) beinhaltet, wobei die mehrdimensionale geografische Clusterebene folgende Dimensionen umfasst:
a) Dichte eines ersten Parameters,
b) quantitative Dynamik des ersten Parameters,
c) qualitative Dynamik des ersten Parameters, und
d) Zeit als diskrete Variable.

6. Verfahren gemäss einem der Ansprüche 1 bis 5, wobei das Analysieren ein Erzeugen von Transitionsmatrizen umfasst, welche Transitionswerte (Tw1-Tw9) beinhalten.

7. Verfahren gemäss einem der Ansprüche 1 bis 6, wobei die geographischen Referenzdaten auf einem Ausgabegerät (117) mit Display (118) ausgegeben werden, sodass eine Visualisierung (S7) der geographischen Referenzdaten als Mapping (29) erfolgt.

8. Verfahren gemäss einem der Ansprüche 1 bis 7, wobei die Verarbeitung (S2, S3) und das Analysieren (S4) ferner eine Ripley-Funktion (G, K und L), Survival-Analysen, vorteilhafterweise mittels Cox-Regressionen und/ oder Kaplan-Meier-Schätzer, und/oder Machine Learning Abfolgen umfasst.

9. Verfahren gemäss einem der Ansprüche 1 bis 8, wobei die Differenzierung und Einteilung (S4) und das Analysieren (S5) auf vier prädiktiven Algorithmen basiert, nämlich Survival Regression, LISA Markov, Co-Location Mining und Extended Machine Learning.

10. Verfahren gemäss Anspruch 9, wobei das Verfahren ferner ein Spatial Positive- und Spatial Negative Co-Location Pattern Directional Mining Algorithmus parallel verwendet, um künftige Co-Location-Muster vorherzusagen.

11. Verfahren gemäss Anspruch 1, wobei die interaktiv bewegbare Zeit- und Raumdarstellung ein Verfahren (100) zur Visualisierung von Lokationsdaten in einer grafischen Benutzerschnittstelle (GUI) umfasst, wobei das Verfahren (100) folgende Schritte umfasst:
Bereitstellen (S8) von geschichteten, geokodierten Lokationsdaten aus mindestens einer Datenbank in einer mehrschichtigen interaktiven Kartendarstellung (4) mit Informationsgehalt in der GUI;
Bestimmen (S9) einer von einem Benutzer selektierten Fläche (5) der mehrschichtigen interaktiven Kartendarstellung (4); und
Anpassen (S10) des Informationsgehalts und struktureller Merkmale der mehrschichtigen interaktiven Kartendarstellung (4) in Abhängigkeit der vom Benutzer selektierten Fläche (5),
wobei die Anpassung (S10) mindestens einer Schicht der mehrschichtigen interaktiven Kartendarstellung (4) eine Veränderung der angezeigten Lokationsdaten umfasst und in Abhängigkeit der vom Benutzer selektierten Fläche (5) automatisiert erfolgt, und wobei die Visualisierung der Lokationsdaten eine geografische Darstellung von dynamischen Verteilungen mindestens eines mit den Lokationsdaten assoziierten Parameters umfasst.

12. Verfahren gemäss Anspruch 11, wobei die Visualisierung der Lokationsdaten als Gradientendarstellung mit Vektorfeldern, welche die Dynamik mindestens eines mit den Lokationsdaten assoziierten Parameters wiedergeben, erfolgt.

13. Verfahren gemäss Anspruch 11 und 12, wobei die mehrschichtige interaktive Kartendarstellung (4) mindestens eine erste Schicht, eine zweite Schicht und eine dritte Schicht umfasst.

14. Verfahren gemäss Anspruch 13, wobei die erste Schicht eine geografische und zeitliche Navigationsebene (11), die zweite Schicht eine Informationsebene (12) und die dritte eine Filterebene (13) ist.

15. Verfahren gemäss einem der Ansprüche 11 bis 14, wobei die mehrschichtige interaktive Kartendarstellung (4) unter Einbezug (S11) zusätzlicher Lokationsdaten als 3-dimensionale Kartendarstellung ausgeführt wird.

16. Verfahren gemäss einem der Ansprüche 11 bis 15, wobei das Verfahren (100) ferner umfasst:
Anpassen des Informationsgehalts (S10) der mehrschichtigen interaktiven Kartendarstellung (4) in Abhängigkeit vom Benutzerverhalten mittels eines Beobachtungssystems, insbesondere einer Kamera.

17. Verfahren gemäss einem der Ansprüche 11 bis 16, wobei die Anpassung (S10) mindestens einer Schicht der mehrschichtigen interaktiven Kartendarstellung (4) in Abhängigkeit der vom Benutzer selektierten Fläche (5) eine Gewichtung und ein Ein-, Aus- oder Überblenden (S12) einzelner Schichten der mehrschichtigen interaktiven Kartendarstellung (4) umfasst.

18. Verfahren gemäss einem der Ansprüche 11 bis 17, wobei die Anpassung (S10) durch verschiedene Zoomstufen (133) erfolgt und der Wechsel von einer zu anderen Zoomstufe durch Ausblenden einer vorherigen Zoomstufe erfolgt.

19. Computersystem, umfassend Mittel zur Ausführung des Verfahrens nach einem der Ansprüche 1 bis 18.

## Claims

1. Method for acquiring, processing and displaying location data, wherein the method comprises the following steps:
- reading location data (S1), which comprise at least first location data and second location data;
- pre-processing (S2) the first location data;
- pre-processing (S2) the second location data;
- superimposing (S3) the pre-processed first location data and the pre-processed second location data by means of layering to form layered location data;
- differentiating and classifying (S4) the layered location data by means of pattern recognition to form regionalized location data;
- analyzing (S5) the regionalized location data by means of an analysis module, wherein the analyzing (S5) of the regionalized location data by means of the analysis module (116) is performed on an exploratory space-time basis, and wherein the analysis module (116) comprises a LISA Markov sequence which is performed at cluster and filter level; and
- generating command data (S6) based on the results of the analysis of the regionalized location data, wherein the command data comprise geographical reference data which are coupled to a time component, and wherein the geographical reference data are output on an output device having a display by means of an interactively movable time and space representation (S7).

2. Method according to claim 1, wherein the first and/or second location data are associated with at least one attribute and the reading (S1) of the first and/or second location data comprises creating lists from at least one database (120-122, 112).

3. Method according to claims 1 and 2, wherein the pre-processing (S2) of the first and second location data comprises geocoding and time coding of the location data as well as a subsequent assignment of the geocoded location data to predefined groups.

4. Method according to any one of claims 1 to 3, wherein the superimposing (S3) of the pre-processed at least first and second location data by means of layering further comprises:
a) creating a map layer (11);
b) creating a point layer (12); and
c) creating a filter layer (13).

5. Method according to claim 4, wherein the differentiating and classifying (S4) of the layered location data by means of pattern recognition to form regionalized location data comprises creating a multidimensional geographical cluster layer on the basis of the point layer (12) and filter layer (13), wherein the multidimensional geographical cluster layer comprises the following dimensions:
a) density of a first parameter,
b) quantitative dynamics of the first parameter,
c) qualitative dynamics of the first parameter, and
d) time as a discrete variable.

6. Method according to any one of claims 1 to 5, wherein the analyzing comprises generating transition matrices which contain transition values (Tw1-Tw9).

7. Method according to any one of claims 1 to 6, wherein the geographical reference data are output on an output device (117) having a display (118), such that a visualization (S7) of the geographical reference data is effected as mapping (29).

8. Method according to any one of claims 1 to 7, wherein the processing (S2, S3) and the analyzing (S4) further comprise a Ripley function (G, K and L), survival analyses, advantageously by means of Cox regressions and/or Kaplan-Meier estimators, and/or machine-learning sequences.

9. Method according to any one of claims 1 to 8, wherein the differentiating and classifying (S4) and the analyzing (S5) are based on four predictive algorithms, namely Survival Regression, LISA Markov, Co-Location Mining and Extended Machine Learning.

10. Method according to claim 9, wherein the method further uses a Spatial Positive and Spatial Negative Co-Location Pattern Directional Mining algorithm in parallel in order to predict future co-location patterns.

11. Method according to claim 1, wherein the interactively movable time and space representation comprises a method (100) for visualizing location data in a graphical user interface (GUI), wherein the method (100) comprises the following steps:
providing (S8) layered, geocoded location data from at least one database in a multilayer interactive map representation (4) having information content in the GUI;
determining (S9) an area (5) of the multilayer interactive map representation (4) selected by a user; and
adapting (S10) the information content and structural features of the multilayer interactive map representation (4) as a function of the area (5) selected by the user,
wherein the adaptation (S10) of at least one layer of the multilayer interactive map representation (4) comprises a change in the displayed location data and is performed automatically as a function of the area (5) selected by the user, and wherein the visualization of the location data comprises a geographical representation of dynamic distributions of at least one parameter associated with the location data.

12. Method according to claim 11, wherein the visualization of the location data is effected as a gradient representation with vector fields which reproduce the dynamics of at least one parameter associated with the location data.

13. Method according to claims 11 and 12, wherein the multilayer interactive map representation (4) comprises at least a first layer, a second layer and a third layer.

14. Method according to claim 13, wherein the first layer is a geographical and temporal navigation layer (11), the second layer is an information layer (12), and the third layer is a filter layer (13).

15. Method according to any one of claims 11 to 14, wherein the multilayer interactive map representation (4) is implemented as a three-dimensional map representation with the inclusion (S11) of additional location data.

16. Method according to any one of claims 11 to 15, wherein the method (100) further comprises:
adapting the information content (S10) of the multilayer interactive map representation (4) as a function of user behavior by means of an observation system, in particular a camera.

17. Method according to any one of claims 11 to 16, wherein the adaptation (S10) of at least one layer of the multilayer interactive map representation (4) as a function of the area (5) selected by the user comprises weighting and fading in, fading out or cross-fading (S12) individual layers of the multilayer interactive map representation (4).

18. Method according to any one of claims 11 to 17, wherein the adaptation (S10) is effected by different zoom levels (133), and the change from one zoom level to another zoom level is effected by fading out a previous zoom level.

19. Computer system comprising means for carrying out the method according to any one of claims 1 to 18.

## Revendications

1. Procédé de détection, de traitement et de représentation de données de localisation, le procédé comprenant les étapes suivantes :
- lecture de données de localisation (S1) comprenant au moins des premières données de localisation et des secondes données de localisation ;
- prétraitement (S2) des premières données de localisation ;
- prétraitement (S2) des secondes données de localisation ;
- superposition (S3) des premières données de localisation prétraitées et des secondes données de localisation prétraitées au moyen d'une stratification en données de localisation en couches ;
- différenciation et classification (S4) des données de localisation en couches au moyen de la reconnaissance de formes en données de localisation régionalisées ;
- analyse (S5) des données de localisation régionalisées au moyen d'un module d'analyse, l'analyse (S5) des données de localisation régionalisées au moyen du module d'analyse (116) s'effectuant sur une base spatio-temporelle exploratoire, et le module d'analyse (116) comprenant une séquence de Markov LISA mise en œuvre sur des calques d'agrégat et de filtre ; et
- génération de données de commande (S6) sur la base des résultats de l'analyse des données de localisation régionalisées, les données de commande comprenant des données de référence géographiques couplées à une composante temporelle, et les données de référence géographiques étant délivrées en sortie sur un périphérique de sortie doté d'un écran sous la forme d'une représentation spatiale et temporelle mobile de manière interactive (S7).

2. Procédé selon la revendication 1, dans lequel les premières et/ou secondes données de localisation sont associées à au moins un attribut et la lecture (S1) des premières et/ou secondes données de localisation comprend la création de listes à partir d'au moins une base de données (120-122, 112).

3. Procédé selon les revendications 1 et 2, dans lequel le prétraitement (S2) des premières et secondes données de localisation comprend un géocodage ainsi qu'un codage temporel des données de localisation, ainsi qu'une affectation ultérieure des données de localisation géocodées à des groupes prédéfinis.

4. Procédé selon l'une des revendications 1 à 3, dans lequel la superposition (S3) des au moins première et secondes données de localisation prétraitées au moyen d'une stratification comprend en outre :
a) la création d'un calque de carte (11) ;
b) la création d'un calque de points (12) ; et
c) la création d'un calque de filtre (13).

5. Procédé selon la revendication 4, dans lequel la différenciation et la classification (S4) des données de localisation en couches au moyen de la reconnaissance de formes en données de localisation régionalisées, comportent la création d'un calque d'agrégat géographique multidimensionnel sur la base du calque de points (12) et du calque de filtre (13), dans lequel le calque d'agrégat géographique multidimensionnel comprend les dimensions suivantes :
a) la densité d'un premier paramètre,
b) la dynamique quantitative du premier paramètre,
c) la dynamique qualitative du premier paramètre, et
d) le temps en tant que variable discrète.

6. Procédé selon l'une des revendications 1 à 5, dans lequel l'analyse comprend la génération de matrices de transition comportant des valeurs de transition (Tw1 à Tw9).

7. Procédé selon l'une des revendications 1 à 6, dans lequel les données de référence géographiques sont délivrées en sortie sur un périphérique de sortie (117) doté d'un écran (118), de sorte qu'une visualisation (S7) des données de référence géographiques sous forme de cartographie (29) est effectuée.

8. Procédé selon l'une des revendications 1 à 7, dans lequel le traitement (S2, S3) et l'analyse (S4) comprennent en outre une fonction de Ripley (G, K et L), des analyses de survie, de préférence au moyen de régressions de Cox et/ou d'estimateurs de Kaplan-Meier, et/ou des séquences d'apprentissage automatique.

9. Procédé selon l'une des revendications 1 à 8, dans lequel la différenciation et la classification (S4) ainsi que l'analyse (S5) sont basées sur quatre algorithmes prédictifs, à savoir la régression de survie, la chaîne de Markov LISA, le « co-location mining » et l'apprentissage automatique étendu.

10. Procédé selon la revendication 9, le procédé utilisant en outre en parallèle un algorithme d'exploration directionnelle des modèles de colocalisation spatiale positive et spatiale négative afin de prédire les futurs modèles de colocalisation.

11. Procédé selon la revendication 1, dans lequel la représentation spatiale et temporelle mobile de manière interactive comprend un procédé (100) de visualisation de données de localisation dans une interface utilisateur graphique (GUI), dans lequel le procédé (100) comprend les étapes suivantes :
fourniture (S8) de données de localisation géocodées et en couches, provenant d'au moins une base de données, dans une représentation (4) cartographique interactive multicouche avec un contenu informationnel dans l'interface utilisateur graphique ;
détermination (S9) d'une surface (5), sélectionnée par un utilisateur, de la représentation (4) cartographique interactive multicouche ; et
adaptation (S10) du contenu informationnel et des caractéristiques structurelles de la représentation (4) cartographique interactive multicouche en fonction de la surface (5) sélectionnée par l'utilisateur,
dans lequel l'adaptation (S10) d'au moins une couche de la représentation (4) cartographique interactive multicouche comprend une modification des données de localisation affichées et est effectuée automatiquement en fonction de la surface (5) sélectionnée par l'utilisateur, et dans lequel la visualisation des données de localisation comprend une représentation géographique des répartitions dynamiques d'au moins un paramètre associé aux données de localisation.

12. Procédé selon la revendication 11, dans lequel la visualisation des données de localisation est effectuée sous forme de représentation en gradient avec des champs vectoriels qui reflètent la dynamique d'au moins un paramètre associé aux données de localisation.

13. Procédé selon les revendications 11 et 12, dans lequel la représentation (4) cartographique interactive multicouche comprend au moins une première couche, une deuxième couche et une troisième couche.

14. Procédé selon la revendication 13, dans lequel la première couche est un calque (11) de navigation géographique et temporel, la deuxième couche est un calque d'information (12) et la troisième est un calque de filtre (13).

15. Procédé selon l'une des revendications 11 à 14, dans lequel la représentation (4) cartographique interactive multicouche est réalisée sous la forme d'une représentation cartographique tridimensionnelle avec prise en compte (S11) de données de localisation supplémentaires.

16. Procédé selon l'une des revendications 11 à 15, dans lequel le procédé (100) comprend en outre :
l'adaptation du contenu informatif (S10) de la représentation (4) cartographique interactive multicouche en fonction du comportement de l'utilisateur au moyen d'un système d'observation, en particulier d'une caméra.

17. Procédé selon l'une des revendications 11 à 16, dans lequel l'adaptation (S10) d'au moins une couche de la représentation (4) cartographique interactive multicouche en fonction de la surface (5) sélectionnée par l'utilisateur comprend une pondération et l'affichage, le masquage ou la fusion (S12) de couches individuelles de la représentation (4) cartographique interactive multicouche.

18. Procédé selon l'une des revendications 11 à 17, dans lequel l'adaptation (S10) est effectuée par l'intermédiaire de différents niveaux de zoom (133) et le passage d'un niveau de zoom à un autre est effectué par masquage d'un niveau de zoom précédent.

19. Système informatique, comprenant des moyens pour mettre en œuvre le procédé selon l'une des revendications 1 à 18.
